# EUROPÄISCHE PATENTSCHRIFT

(11) **EP 4 511 283 B1**
(45) Veröffentlichungstag und Bekanntmachung des Hinweises auf die Patenterteilung: **11.03.2026**
(21) Anmeldenummer: 23713925.8
(22) Anmeldetag: 28.03.2023
(51) Int. Cl.: B63B 21/00, B63B 35/44

(54) **SCHWIMMFÄHIGES OFFSHORE-BAUWERK**
FLOATING OFFSHORE STRUCTURE
STRUCTURE EN MER FLOTTANTE

(30) Priorität: 21.04.2022 DE 102022109688
(43) Veröffentlichungstag der Anmeldung: 26.02.2025
(73) Patentinhaber: RWE Offshore Wind GmbH, 45141 Essen (DE)
(72) Erfinder: RUNGE, Jörn, 45141 Essen (DE); VON SCHÉELE, Aron, 45141 Essen (DE); DEUS, Pascal, 45141 Essen (DE)
(74) Vertreter: Cohausz & Florack
(86) Internationale Anmeldenummer: PCT/EP2023/057909
(87) Internationale Veröffentlichungsnummer: WO 2023/202847

(56) Entgegenhaltungen:
- EP-A1- 3 943 747
- JP-A- 2020 002 934

## Beschreibung

Die Anmeldung betrifft ein schwimmfähiges Offshore-Bauwerk, umfassend mindestens einen Seeenergiekabelanschluss, eingerichtet zum Anschließen eines Seeenergiekabels, und mindestens einen Ankeranschluss, eingerichtet zum Anschließen mindestens einer Ankerverbindung zum Verankern des schwimmfähigen Offshore-Bauwerk an einem Unterwasserboden. Darüber hinaus betrifft die Anmeldung ein (schwimmfähiges) Energieerzeugungssystem, ein Verfahren und eine Verwendung. Ein schwimmfähiges Offshore-Bauwerk nach dem Stand der Technik ist beispielsweise in Dokument EP3943747 offenbart.

In der heutigen Zeit werden zur Bereitstellung von elektrischer Energie vermehrt Energieerzeugungssysteme verwendet, bei dem die Generierung der elektrischen Energie auf so genannten erneuerbaren Energiequellen basiert. Elektrische Energieerzeugungssysteme weisen mindestens eine Energieerzeugungsvorrichtung auf, vorzugsweise eine Mehrzahl von Energieerzeugungsvorrichtungen.

Beispielswese werden als elektrische Energieerzeugungssysteme Windenergiesysteme bzw. Windparks mit mindestens einer Windkraftanlage als Energieerzeugungsvorrichtung eingesetzt. Eine Windkraftanlage ist insbesondere zum Wandeln der kinetischen Windenergie in elektrische Energie eingerichtet. Neben Windenergiesystemen bzw. Windparks werden zudem vermehrt Photovoltaiksysteme bzw. Photovoltaikparks als elektrische Energieerzeugungssysteme errichtet, bei denen in der Regel eine Mehrzahl von Photovoltaikmodulen zur elektrischen Energieerzeugung vorgesehen sind.

Derartige Energieerzeugungssysteme finden sich nicht nur an Onshore-Standorten, sondern vermehrt auch an Offshore-Standorten. Die Gründe für die Wahl eines Offshore-Standorts sind vielfältig: So kann der verfügbare Raum an Land beschränkt sein. Zudem hat sich gezeigt, dass der Energieertrag beispielsweise bei Windparks gesteigert werden kann. So zeichnen sich Offshore-Standorte üblicherweise durch relativ kontinuierliche Windbedingungen und hohe durchschnittliche Windgeschwindigkeiten aus, so dass beispielsweise vermehrt so genannte Offshore-Windenergiesysteme bzw. Offshore-Windparks errichtet werden. Offshore-Photovoltaikparks können beispielsweise aus Platzgründen installiert werden.

In der Regel weist ein Offshore-Energieerzeugungssystem eine Vielzahl an Offshore-Bauwerken auf, wie eine Vielzahl von Offshore-Windkraftanlagen und mindestens eine Offshore-Umspannstation, über die ein Offshore-Windpark elektrisch, beispielsweise mit einer Onshore-Umspannstation oder einer weiteren Offshore-Umspannstation bzw. Offshore-Konverterstation, verbunden ist.

Eine Onshore-Umspannstation wiederum kann mit einem öffentlichen Stromnetz verbunden sein. Zum Übertragen von elektrischer Energie zwischen zwei Offshore-Bauwerken oder einem Offshore-Bauwerk und einem Onshore-Bauwerk sind Energiekabel in Form von Seeenergiekabeln zwischen den genannten Bauwerken verlegt.

Während es bisher bei Offshore-Windkraftanlagen und Offshore-Umspannstationen, aber auch bei anderen Offshore-Bauwerken, wie Photovoltaikplattform, Plattformen zur Gas oder Öl-Exploration etc., üblich war, diese durch eine Gründungsstruktur (z.B. Monopile-, Tripod-, Tripile- oder Jacket-Gründungen) auf bzw. in dem Unterwasserboden, insbesondere einem Meeresboden, zu verankern, gibt es vermehrt Überlegungen dazu, schwimmende bzw. schwimmfähige Offshore-Bauwerke zu installieren, beispielsweise schwimmfähige Energieerzeugungsvorrichtungen, wie schwimmfähige Offshore-Windkraftanlagen oder schwimmfähige Photovoltaikplattformen.

Ein Grund für die Verwendung von schwimmfähigen Offshore-Bauwerken bzw. Offshore-Strukturen ist die Möglichkeit, solche Offshore-Bauwerke auch in Gebieten mit einer großen Wassertiefe, beispielsweise von mehr als 150 m, zu installieren.

Ein schwimmfähiges bzw. schwimmendes Offshore-Bauwerk kann mindestens ein schwimmfähiges Fundament mit mindestens einem Schwimmkörper aufweisen. Auf dem schwimmfähigen Fundament kann eine Vorrichtung mit mindestens einem Seeenergiekabelanschluss angeordnet sein. Bei Varianten kann der Seeenergiekabelanschluss auch an dem Fundament angeordnet sein. Ein Seeenergiekabelanschluss ist eingerichtet zum Anschließen eines Seeenergiekabels.

Beispielsweise kann als Vorrichtung auf dem Fundament eine Umspannvorrichtung mit mindestens einem Transformator, eine Windkraftvorrichtung, eine Photovoltaikvorrichtung, eine Wasserstoffproduktionsvorrichtung etc. installiert sein.

Für einen (dauerhaften) stationären Betrieb des Offshore-Bauwerks an einem bestimmten Installationsort wird das Offshore-Bauwerk an dem Unterwasserboden (in der Regel ein Meeresboden) durch mindestens eine Verankerungsanordnung befestigt. Die mindestens eine Verankerungsanordnung ist eingerichtet zum Befestigen des Offshore-Bauwerks an einem Unterwasserboden in einem Verankerungszustand des Offshore-Bauwerks.

Hierzu kann die Verankerungsanordnung mindestens eine zwischen einem Anker, der zumindest teilweise in dem Unterwasserboden eingegraben ist, und dem schwimmfähigen Offshore-Bauwerk verlaufende Ankerverbindung aufweisen. So umfasst das Offshore-Bauwerk mindestens einen Ankeranschluss. Der Ankeranschluss ist eingerichtet zum Anschließen mindestens einer Ankerverbindung zum Verankern des schwimmfähigen Offshore-Bauwerks an dem Unterwasserboden. Bei Varianten können auch zwei oder mehr Ankerverbindungen an einem Ankeranschluss angeschlossen bzw. befestigt sein.

Problematisch bei den beschriebenen schwimmfähigen Offshore-Bauwerken ist, dass während des Betriebs eines Offshore-Bauwerks eine Ankerverbindung reißen kann bzw. durchtrennt werden kann. Eine Ankerverbindung kann beispielsweise aufgrund der hohen mechanischen Lasten, die im Laufe des Betriebs auf eine Ankerverbindung wirken, einem Unfall mit einem Wasserfahrzeug oder dergleichen reißen.

In Folge einer gerissenen Ankerverbindung kann es zu einem Reißen des unter elektrischer Spannung stehenden angeschlossenen Seeenergiekabels kommen. Ein Reißen eines unter Spannung stehenden angeschlossenen Seeenergiekabels führt zu einem Kurzschluss und bringt damit ein hohes Sicherheitsrisiko mit sich, da regelmäßig hohe Ströme über Seeenergiekabel fließen und/oder hohe Spannungen an einem solchen Kabel anliegen.

Daher liegt der Anmeldung die Aufgabe zugrunde, ein schwimmfähiges Offshore-Bauwerk mit einem Seeenergiekabelanschluss zum Anschließen eines Seeenergiekabels bereitzustellen, bei dem die Sicherheit während des Betriebs des schwimmfähigen Offshore-Bauwerks erhöht ist.

Die Aufgabe wird gemäß einem ersten Aspekt der Anmeldung gelöst durch ein schwimmfähiges Offshore-Bauwerk nach Anspruch 1. Das schwimmfähige Offshore-Bauwerk umfasst mindestens einen Seeenergiekabelanschluss. Der mindestens eine Seeenergiekabelanschluss ist eingerichtet zum Anschließen eines Seeenergiekabels. Das schwimmfähige Offshore-Bauwerk umfasst mindestens einen Ankeranschluss. Der mindestens eine Ankeranschluss ist eingerichtet zum Anschließen mindestens einer Ankerverbindung zum Verankern des schwimmfähigen Offshore-Bauwerks an einem Unterwasserboden. Das schwimmfähige Offshore-Bauwerk umfasst mindestens eine Detektionsanordnung. Die mindestens eine Detektionsanordnung ist eingerichtet zum Detektieren einer Ankerverbindungsreißindikation (z.B. einer gerissenen Ankerverbindung des schwimmfähigen Offshore-Bauwerks oder eines Ankerverbindungszustands einer Ankerverbindung des schwimmfähigen Offshore-Bauwerks, die auf Grund hoher Belastung zu reißen droht). Das schwimmfähige Offshore-Bauwerk umfasst mindestens eine Schalteinrichtung. Die mindestens eine Schalteinrichtung ist eingerichtet zum zumindest elektrischen Trennen (bzw. Abschalten bzw. Trennen) der elektrischen Verbindung zu dem an dem Seeenergiekabelanschluss angeschlossenen Seeenergiekabel bei oder nach einer Detektion einer Ankerverbindungsreißindikation.

Indem im Gegensatz zum Stand der Technik anmeldungsgemäß ein schwimmfähiges Offshore-Bauwerk bereitgestellt wird, welches eine Detektionsanordnung zum Detektieren einer Ankerverbindungsreißindikation, insbesondere eines Reißens einer Ankerverbindung bzw. einer gelösten Ankerverbindung, und eine Schalteinrichtung umfasst, die bei einer derartigen Detektion den Stromfluss bzw. die Energieübertragung durch ein angeschlossenes Seeenergiekabel unterbricht, wird die Sicherheit während des Betriebs des schwimmfähigen Offshore-Bauwerks erhöht. Ein Abreißen eines unter Spannung stehenden Seeenergiekabels wird (sicher) verhindert. Ein ungewollter Kurzschluss wird vermieden.

Das anmeldungsgemäße Offshore-Bauwerk ist ein schwimmfähiges bzw. im Betrieb schwimmendes Offshore-Bauwerk. Das schwimmfähige Offshore-Bauwerk bzw. die schwimmfähige Offshore-Struktur weist mindestens einen Seeenergiekabelanschluss auf. Beispielsweise können zwei Seeenergiekabelanschluss vorgesehen sein. Ein Seeenergiekabelanschluss dient zum Anschließen eines Seeenergiekabels im Betrieb des Offshore-Bauwerks. Beispielsweise können zwei Seeenergiekabel an ein Offshore-Bauwerk angeschlossen sein.

Ein Seeenergiekabel ist insbesondere eingerichtet zum Übertragen von elektrischer Energie. Das Seeenergiekabel ist vorzugsweise ein Mittelspannungsseekabel (insbesondere zwischen 3 kV bis 30 kV) oder ein Hochspannungsseekabel (60 kV bis 110 kV). Die Leistungskapazität eines anmeldungsgemäßen Seeenergiekabels liegt vorzugsweise zwischen 3 MW und 2,5 GW. Zusätzlich kann ein Seeenergiekabel auch zur Datenübertragung eingerichtet sein.

Ein anmeldungsgemäßes Seeenergiekabel kann insbesondere von dem Seeenergiekabelanschluss zum Unterwasserboden und dann in dem Unterwasserboden in einem bestimmten Tiefenbereich verlaufen. Wenn das weitere angeschlossene Bauwerk ebenfalls ein Offshore-Bauwerk ist, kann das Seeenergiekabel dann von dem Unterwasserboden zu einem weiteren Seeenergiekabelanschluss des weiteren (schwimmfähigen) Offshore-Bauwerks verlaufen. Wenn das weitere angeschlossene Bauwerk ein Onshore-Bauwerk ist, kann das Seeenergiekabel im Wesentlichen im Boden bis zu dem weiteren Seeenergiekabelanschluss des Onshore-Bauwerks verlaufen.

Gemäß einer bevorzugten Ausführungsform des anmeldungsgemäßen Offshore-Bauwerks kann das schwimmfähige Offshore-Bauwerk ein Fundament mit mindestens einem Schwimmkörper umfassen. Das schwimmfähige Offshore-Bauwerk kann mindestens eine auf dem Fundament angeordnete Vorrichtung umfassen. Diese Vorrichtung kann den mindestens einen Seeenergiekabelanschluss umfassen. Vorzugsweise kann die Vorrichtung eine elektrische Energieerzeugungsvorrichtung sein. Beispielhafte und nicht abschließende Vorrichtungen mit Seeenergiekabelanschluss sind Umspannvorrichtungen mit mindestens einem elektrischen Transformator, Windkraftvorrichtungen (z.B. umfassend Turm, Gondel, Rotor, Generator etc.), Photovoltaikvorrichtungen (mit vorzugsweise einer Mehrzahl an Photovoltaikmodulen) und Wasserstoffproduktionsvorrichtungen, insbesondere eine Wasserelektrolysevorrichtung.

Wie bereits beschrieben wurde, kann das mindestens eine schwimmfähige Fundament mindestens einen Schwimmkörper umfassen. Ein Schwimmkörper bzw. Auftriebskörper ist insbesondere aufgrund seines Auftriebs durch Verdrängung nach dem archimedischen Prinzip selbständig schwimmfähig. Schwimmkörper können beispielsweise hohl sein und mit Luft oder mit einem leichten Feststoff gefüllt sein. Insbesondere kann das schwimmfähige Fundament den Schwimmkörper im Wesentlichen bilden.

Das schwimmfähige Fundament kann vorzugsweise ein sogenanntes Barge-Fundament, Semi-Submersible-Fundament, Spar-Fundament und/oder Tension Leg Platform (TLP) Fundament sein. Es versteht sich, dass bei anderen Varianten der Anmeldung auch andere Arten von schwimmfähigen Fundamenten vorgesehen sein können.

Anmeldungsgemäß umfasst das Offshore-Bauwerk mindestens einen Ankeranschluss. Insbesondere kann das Fundament mindestens einen Ankeranschluss umfassen. Ein Ankeranschluss ist eingerichtet zum (mechanischen) Anschließen mindestens einer Ankerverbindung. Im Betrieb ist das Offshore-Bauwerk über die mindestens eine Ankerverbindung an dem Unterwasserboden befestigt bzw. verankert.

Eine anmeldungsgemäße Ankerverbindung ist vorzugsweise ein Ankerseil und/oder eine Ankerkette. Ein Ankerseil kann aus Metall, insbesondere Stahl, und/oder Kunststoff, insbesondere mindestens einem Faserverbundwerkstoff, gebildet sein. Vorzugsweise können zwei oder mehr Ankerseile miteinander verdrillt sein, um eine Ankerverbindung zu bilden. Zum Schutz des mindestens einen Ankerseils kann eine Ummantelung vorgesehen sein.

Ein Ende der Ankerverbindung ist (im Installationszustands des schwimmfähigen Offshore-Bauwerks) mit dem Ankeranschluss verbunden und das andere Ende der Ankerverbindung an einem Anker (z.B. Gewichtsanker, Torpedoanker etc.). Der Anker kann zumindest teilweise in dem Unterwasserboden eingegraben sein. Anker und Ankerverbindung bilden insbesondere eine Verankerungsanordnung. Vorzugsweise kann ein schwimmfähiges Offshore-Bauwerk über drei Ankerverbindungen verfügen, die beispielsweise an einer entsprechenden Anzahl an Ankeranschlüssen des Offshore-Bauwerks befestigt sein kann.

Anmeldungsgemäß ist erkannt worden, dass die Betriebssicherheit eines schwimmfähigen Offshore-Bauwerks verbessert wird, an dem mindestens ein Seeenergiekabel angeschlossen ist, indem eine Detektionsanordnung zum Detektieren einer Ankerverbindungsreißindikation, insbesondere einer (tatsächlich) gerissenen Ankerverbindung, und eine mit der Detektionsanordnung verbundene Schalteinrichtung implementiert sind.

Die Detektionsanordnung dient der unmittelbaren und/oder mittelbaren Überwachung der mindestens einen Ankerverbindung des schwimmfähigen Offshore-Bauwerks, insbesondere von sämtlichen Ankerverbindungen des schwimmfähigen Offshore-Bauwerks. Die Detektionsanordnung ist insbesondere zum Detektieren einer gerissenen Ankerverbindung bzw. einer durchtrennten Ankerverbindung vorgesehen. Eine gerissene Ankerverbindung liegt zumindest dann vor, wenn die mechanische bzw. strukturelle Verbindung zu dem Anker der Ankeranordnung gelöst ist.

Unter einer der Detektion einer Ankerverbindungsreißindikation ist die Detektion eines bestimmten Ereignisses bzw. eines bestimmten Parameters gemeint, das/der eine (tatsächlich oder potentiell) gerissene Ankerverbindung oder eine mit einer hohen Wahrscheinlichkeit (z.B. > 95 %) zu reißende Ankerverbindung (beispielsweise aufgrund einer derzeitigen Belastung der Ankerbindung, die eine vorgegebene maximal zulässige Belastung übersteigt) indiziert. Eine potentiell gerissene Ankerverbindung liegt insbesondere dann vor, wenn die Detektionsanordnung einen Parameter bzw. ein Ereignis detektiert, der/das eine gerissene Ankerverbindung indiziert, aber auch andere Ursachen haben kann, wie zum Beispiel einen Defekt der Detektionsanordnung (z.B. ein Messfehler oder dergleichen).

Bei oder nach Detektion mindestens einer Ankerverbindungsreißindikation, insbesondere einer gerissenen Ankerverbindung, erfolgt, durch die Schalteinrichtung, zumindest ein elektrisches Trennen der Verbindung zu dem Seeenergiekabel, das an dem schwimmfähigen Offshore-Bauwerk bzw. dem elektrischen System des schwimmfähigen Offshore-Bauwerks angeschlossen ist. Insbesondere erfolgt ein Unterbrechen des Stromflusses bzw. Unterbrechen des Energieflusses durch das mindestens eine Seeenergiekabel, das an dem schwimmfähigen Offshore-Bauwerk angeschlossen ist. Mit anderen Worten, das mindestens eine Seeenergiekabel wird durch die Schalteinrichtung spannungslos geschaltet. Insbesondere kann die Schalteinrichtung den Stromfluss bzw. Energiefluss bei sämtlichen an das schwimmfähige Offshore-Bauwerk angeschlossenen Seeenergiekabeln trennen bzw. unterbrechen. Beispielsweise kann die Schalteinrichtung für jedes angeschlossene Seeenergiekabel mindestens ein Schaltmodul aufweisen. Das elektrische Trennen umfasst hierbei insbesondere ein (ordnungsgemäßes) Erden. Hierdurch besteht keine Gefahr eines Kurzschlusses mehr.

Insbesondere ist die Schalteinrichtung in Form einer Schutzschaltung bzw. Abrisschaltung gebildet. Bei oder nach einer Detektion meint anmeldungsgemäß insbesondere, dass das beschriebene Trennen zumindest innerhalb einer bestimmten Zeitdauer nach der Detektion der Ankerverbindungsreißindikation erfolgt. Die bestimmte Zeitdauer kann zumindest kleiner als 10 Sekunden sein, insbesondere kleiner als 5 Sekunden, besonders bevorzugt kleiner als 1 Sekunde. Mit anderen Worten, die Schalteinrichtung kann vorzugsweise eingerichtet sein zum elektrischen Trennen unmittelbar (also insbesondere innerhalb einer Zeitdauer von weniger als 1 Sekunde) bei bzw. nach der Detektion der Ankerverbindungsreißindikation, insbesondere einer gerissenen Ankerverbindung. Dies meint insbesondere, dass die Schalteinrichtung unmittelbar bei bzw. nach Detektion der Ankerverbindungsreißindikation, insbesondere der mindestens einen gerissenen Ankerverbindung, ausgelöst wird, derart, dass das mindestens eine Seeenergiekabel unmittelbar spannungslos geschaltet wird.

Gemäß einer bevorzugten Ausführungsform des anmeldungsgemäßen schwimmfähigen Offshore-Bauwerks kann die Detektionsanordnung mindestens einen Positionssensor umfassen. Der mindestens eine Positionssensor kann eingerichtet sein zum Erfassen der (augenblicklichen) Position des schwimmfähigen Offshore-Bauwerks.

Die Detektionsanordnung kann mindestens ein Positionsauswertemodul umfassen. Das Positionsauswertemodul kann eingerichtet sein zum Detektieren der Ankerverbindungsreißindikation, basierend auf der erfassten Position und einem vorgegebenen zulässigen Positionsbereich.

Der mindestens eine Positionssensor kann insbesondere ein satellitenbasierter Positionssensor sein. Beispielsweise kann ein GPS-Sensor, Galileo-Sensor etc. als Positionssensor vorgesehen sein.

Der mindestens eine Positionssensor ist insbesondere zur im Wesentlichen kontinuierlichen Erfassung der augenblicklichen geographischen Position des schwimmfähigen Offshore-Bauwerks eingerichtet. Mit anderen Worten, eine Ortung des schwimmfähigen Offshore-Bauwerks kann insbesondere kontinuierlich erfolgen.

Die erfasste Position bzw. die erfassten Positionsdaten, insbesondere in Form von geografischen Koordinaten (z.B. GPS-Daten), kann/können (kontinuierlich) dem Positionsauswertemodul bereitgestellt werden. Das Positionsauswertemodul ist insbesondere eingerichtet zum Auswerten der erfassten Position bzw. der erfassten Positionsdaten zum Detektieren einer Ankerverbindungsreißindikation, insbesondere einer gerissenen Ankerverbindung. Insbesondere ist anmeldungsgemäß erkannt worden, dass basierend auf der augenblicklichen Position des Offshore-Bauwerks (mittelbar) auf den Zustand (z.B. gerissen oder intakt) der mindestens einen Ankerverbindung geschlossen werden kann.

Vorzugsweise ist ein zulässiger (geographischer) Positionsbereich des schwimmfähigen Offshore-Bauwerks vorgegeben. Insbesondere kann der zulässige Positionsbereich vor und/oder bei der Inbetriebnahme des schwimmfähigen Offshore-Bauwerks bestimmt werden. Der zulässige Positionsbereich gibt insbesondere den maximal möglichen Bewegungsradius eines mit mindestens einer Ankerverbindung an dem Unterwasserboden verankerten schwimmfähigen Offshore-Bauwerks an und kann beispielsweise von Parametern, wie der Länge (z.B. über 1000 m) der mindestens einen Ankerverbindung, der Anzahl der angeschlossenen Ankerverbindungen und/oder einem vorgesehen Längenpuffer des mindestens einen Seeenergiekabels abhängen.

Beispielsweise ist der Bewegungsradius eines im Betrieb schwimmenden Offshore-Bauwerks umso größer, je länger die mindestens eine Ankerverbindung ist bzw. je größer die Wassertiefe an dem Installationsort des schwimmfähigen Offshore-Bauwerks ist. Das Seeenergiekabel kann einen den maximal möglichen Bewegungsradius berücksichtigen Längenpuffer bzw. Längenspielraum haben. Der Längenpuffer kann beispielsweise durch S-förmigen Kabelverlaufs des Seeenergiekabels von dem Offshore-Bauwerk zu dem Unterwasserboden erreicht werden, wobei der Verlauf mit Hilfe von mindestens einem an dem Seeenergiekabel angeordneten Auftriebskörper bereitgestellt werden kann. Der Längenpuffer ist insbesondere derart gewählt, dass bei einem sich innerhalb des maximalen Bewegungsradius bewegendes Offshore-Bauwerk sichergestellt ist, dass das Seeenergiekabel nicht beschädigt wird.

Das zulässige Positionsbereich kann gleich sein wie der maximale Bewegungsradius oder vorzugsweise (etwas (z.B. 5 %)) größer sein, wobei der maximale Bewegungsradius vollständig eingeschlossen ist. Der zulässige Positionsbereich sorgt insbesondere dafür, dass kleine Positionsabweichungen durch Messungenauigkeit, aber auch hervorgerufen durch die Wetterbedingungen am Installationsstandort, nicht zu einer Auslösung der Schalteinrichtung führen. Lediglich größere Abweichungen, welche das Seeenergiekabel gefährden könnten, führen zur Auslösung der der Schalteinrichtung. Der zulässige Positionsbereich kann insbesondere durch Grenzpositionsdaten (z.B. geographische Koordinaten, wie GPS-Koordinaten) definiert sein. Solange die erfassten Positionsdaten des schwimmfähigen Offshore-Bauwerks innerhalb des zulässigen Positionsbereichs liegen, kann angenommen werden, dass die mindestens eine Ankerverbindung intakt ist bzw. nicht gerissen ist. Ein Trennen des Stromflusses unterbleibt in diesem Fall.

Liegen hingegen die erfassten Positionsdaten des schwimmfähigen Offshore-Bauwerks außerhalb des zulässigen Positionsbereichs, kann ein Ereignis bzw. ein Parameter detektiert werden, das/der indiziert, dass die mindestens eine Ankerverbindung (potentiell oder tatsächlich) gerissen bzw. getrennt ist (oder unmittelbar mit einer hohen Wahrscheinlichkeit (> 95 %) zu reißen droht).

Das Positionsauswertemodul kann insbesondere eingerichtet sein, die erfasste Position bzw. die erfassten Positionsdaten (kontinuierlich) mit dem zulässigen Positionsbereich zu vergleichen. Wenn festgestellt wird, dass die erfasste Position bzw. die erfassten Positionsdaten des Offshore-Bauwerks außerhalb des zulässigen Positionsbereichs liegt/liegen, kann (unmittelbar) die Schalteinrichtung in beschriebener Weise ausgelöst werden. In sicherer Weise kann insbesondere eine gerissene Ankerverbindung detektiert werden, ohne dass zusätzliche Sensoren zum Überwachen einer Ankerverbindung erforderlich sind.

Bei Varianten der Anmeldung kann vorgesehen sein, dass die Schalteinrichtung erst dann in beschriebener Weise ausgelöst wird, wenn die erfasste Position bzw. die erfassten Positionsdaten des Offshore-Bauwerks für eine bestimmte (vorgegebene) Zeitdauer (z.B. zwischen 0,5 s und 10 s) außerhalb des zulässigen Positionsbereichs liegt/liegen. Für den Fall, dass die erfasste Position des Offshore-Bauwerks vor einem Ablauf der genannten Zeitdauer wieder innerhalb des zulässigen Bereichs liegt, kann ein Auslösen der Schalteinrichtung unterbleiben.

Gemäß einer weiteren Ausführungsform des anmeldungsgemäßen schwimmfähigen Offshore-Bauwerks kann die Detektionsanordnung (alternativ oder zusätzlich zu dem Positionssensor) mindestens einen Ankerverbindungsstruktursensor umfassen. Der Ankerverbindungsstruktursensor kann eingerichtet sein zum (im Wesentlichen kontinuierlichen) Erfassen mindestens eines Ankerverbindungsstrukturparameters der Ankerverbindung des schwimmfähigen Offshore-Bauwerks. Dies meint insbesondere, dass durch den Ankerverbindungsstruktursensor die Strukturintegrität der Ankerverbindung schwimmfähigen Offshore-Bauwerks überwacht werden kann.

Die Detektionsanordnung kann (alternativ oder zusätzlich zu dem Positionsauswertemodul) mindestens ein Ankerverbindungsstrukturauswertemodul umfassen. Das Ankerverbindungsstrukturauswertemodul kann eingerichtet sein zum Detektieren der Ankerverbindungsreißindikation, basierend auf dem mindestens einen erfassten Ankerverbindungsstrukturparameter und insbesondere mindestens einem vorgegebenen zulässigen Ankerverbindungsstrukturparameterbereich. Insbesondere kann das Ankerverbindungsstrukturauswertemodul die erfassten Ankerverbindungsstrukturparameterwerte im Wesentlichen kontinuierlichen auswerten.

Der zulässige Ankerverbindungsstrukturparameterbereich definiert insbesondere einen Parameterbereich, bei dem die mindestens eine Ankerverbindung des schwimmfähigen Offshore-Bauwerks intakt ist bzw. nicht gerissen ist (und insbesondere auch noch nicht unmittelbar zu reißen droht). Insbesondere kann mindestens ein Grenzverbindungsstrukturparameterwert vorgegeben sein.

Solange die erfassten Ankerverbindungsstrukturparameterwerte der mindestens einen Ankerverbindung innerhalb des zulässigen Ankerverbindungsstrukturparameterbereich liegen, kann angenommen werden, dass die mindestens eine Ankerverbindung intakt ist bzw. nicht gerissen ist. In diesem Fall kann insbesondere ein elektrisches Trennen des Stromflusses unterbleiben. Liegen hingegen die erfassten Ankerverbindungsstrukturparameterwerte außerhalb des zulässigen Ankerverbindungsstrukturparameterbereich, kann ein Ereignis bzw. ein Parameter detektiert werden, das/der indiziert, dass die mindestens eine Ankerverbindung (potentiell oder tatsächlich) gerissen bzw. getrennt ist (oder unmittelbar mit einer hohen Wahrscheinlichkeit (> 95 %) zu reißen droht).

Das Ankerverbindungsstrukturauswertemodul kann insbesondere eingerichtet sein, die erfassten Ankerverbindungsstrukturparameterwerte (kontinuierlich) mit dem zulässigen Ankerverbindungsstrukturparameterbereich zu vergleichen. Wenn festgestellt wird, dass die erfassten Ankerverbindungsstrukturparameterwerte außerhalb des zulässigen Ankerverbindungsstrukturparameterbereich liegen, kann (unmittelbar) die Schalteinrichtung in beschriebener Weise ausgelöst werden.

Gemäß einer besonders bevorzugten Ausführungsform des anmeldungsgemäßen schwimmfähigen Offshore-Bauwerks kann die Detektionsanordnung, insbesondere als Ankerverbindungsstruktursensor, mindestens eine elektrischen Sensoreinrichtung umfassen. Die elektrische Sensoreinrichtung kann eingerichtet sein zum (im Wesentlichen kontinuierlichen) Erfassen mindestens eines elektrischen Parameters eines an der Ankerverbindung zumindest teilweise entlang geführten elektrischen Leiters. Die Detektionsanordnung kann, insbesondere als Ankerverbindungsstrukturauswertemodul, mindestens ein elektrisches Auswertemodul umfassen. Das elektrische Auswertemodul kann eingerichtet sein zum Detektieren Ankerverbindungsreißindikation, basierend auf dem mindestens einen erfassten elektrischen Parameter und insbesondere mindestens einem vorgegebenen zulässigen elektrischen Parameterbereich.

Die elektrische Sensoreinrichtung kann ein Teil einer elektrischen Sensoranordnung sein. Die Sensoranordnung kann ferner einen elektrischen (Mess-)Leiter mit beispielsweise einer Hinleitung und einer Rückleitung umfassen. Bei einer Ausführungsform kann das schwimmfähige Offshore-Bauwerk die mindestens eine elektrische Sensoranordnung (und insbesondere die hiermit überwachte eine Ankerverbindung) umfassen.

Eine Hinleitung eines elektrischen Leiters kann vorzugsweise von dem an dem Ankeranschluss angeschlossenen Ende der Ankerverbindung bis zu dem anderen Ende der Ankerverbindung verlaufen, das an dem Anker befestigt ist. An die Hinleitung kann sich die Rückleitung des elektrischen Leiters unmittelbar anschließen und von dem anderen Ende der Ankerverbindung bis zu dem an dem Ankeranschluss angeschlossenen Ende der Ankerverbindung verlaufen. Die elektrische Sensoreinrichtung kann mit der Hinleitung und der Rückleitung verbunden sein.

Der elektrische Leiter kann derart an der Ankerverbindung angeordnet sein, dass bei einem Reißen der Ankerverbindung auch der elektrische Leiter (zumindest nahezu zeitgleich) durchtrennt wird. Bei einem Ankerseil kann der elektrische Leiter beispielsweise in dem Ankerseil integriert sein. Bei einer Ankerkette kann der Leiter beispielsweise durch an den Kettengliedern angebrachte Ösen geführt sein. Der Leiter kann mindestens einen Phasenleiter umfassen, der von einer Isolationsschicht umgegeben ist.

Die elektrische Sensoreinrichtung kann insbesondere einen Generator aufweisen, eingerichtet zum Beaufschlagen des elektrischen Leiters (insbesondere der Hin- und Rückleitung) mit einer bestimmten Spannung und/oder einem bestimmten Strom. Ferner kann die elektrische Sensoreinrichtung mindestens ein Messmodul zum Erfassen, insbesondere Messen, mindestens eines elektrischen Parameters (z.B. Spannung, Strom, Magnetfeld, elektrisches Feld etc.) umfassen, der aus dem durch den Generator angelegten elektrischen Parameter und dem Zustand (z.B. gerissen oder nicht gerissen) des elektrischen Leiters resultiert.

Wie beschrieben wurde, ist der elektrische Leiter derart an der Ankerverbindung befestigt, dass bei einem Reißen der Ankerverbindung auch der elektrische Leiter (zeitgleich) reißt. Ein Reißen bzw. Durchtrennen des elektrischen Leiters bewirkt eine detektierbare Änderung des mindestens einen erfassten elektrischen Parameters. Insbesondere bewirkt ein Reißen des elektrischen Leiter eine Änderung des erfassten elektrischen Parameters derart, dass der erfasste elektrische Parameter(wert) nicht mehr in dem vorgegebenen zulässigen elektrischen Parameterbereich liegt.

Der zulässige elektrische Parameterbereich definiert insbesondere einen Parameterbereich eines gemessenen elektrischen Parameters (z.B. Spannung, Strom, Magnetfeld, elektrisches Feld etc.), bei dem der elektrische Leiter und damit auch die mindestens eine Ankerverbindung intakt sind bzw. nicht gerissen sind. Insbesondere kann mindestens ein elektrischer Grenzparameterwert vorgegeben sein.

Solange die erfassten elektrischen Parameterwerte des mindestens einen erfassten elektrischen Parameters innerhalb des zulässigen Parameterbereichs liegen, kann angenommen werden, dass die mindestens eine Ankerverbindung intakt ist bzw. nicht gerissen ist. Ein elektrisches Trennen des Stromflusses unterbleibt. Liegt hingegen der mindestens eine erfasste elektrische Parameterwert außerhalb des zulässigen Parameterbereichs, kann ein Ereignis bzw. ein Parameter detektiert werden, das/der indiziert, dass die mindestens eine Ankerverbindung (potentiell oder tatsächlich) gerissen bzw. getrennt ist (oder unmittelbar mit einer hohen Wahrscheinlichkeit (> 95 %) zu reißen droht).

Das elektrische Auswertemodul kann insbesondere eingerichtet sein, die erfassten elektrischen Parameterwerte (kontinuierlich) mit dem zulässigen Parameterbereich zu vergleichen. Wenn festgestellt wird, dass die erfassten Parameterwerte außerhalb des zulässigen Positionsbereichs liegt/liegen, kann (unmittelbar) die Schalteinrichtung in beschriebener Weise ausgelöst werden. Eine sichere Detektion insbesondere einer tatsächlich gerissenen Ankerverbindung kann bereitgestellt werden.

Alternativ oder zusätzlich kann, bei einer Ausführungsform des anmeldungsgemäßen schwimmfähigen Offshore-Bauwerks, die Detektionsanordnung mindestens eine optische Sensoreinrichtung umfassen. Die optische Sensoreinrichtung kann eingerichtet sein zum Erfassen mindestens eines optischen Parameters eines an der Ankerverbindung zumindest teilweise entlang geführten optischen Leiters. Die Detektionsanordnung kann mindestens ein optisches Auswertemodul umfassen. Das optische Auswertemodul kann eingerichtet sein zum Detektieren der Ankerverbindungsreißindikation, basierend auf dem mindestens einen erfassten optischen Parameter und insbesondere mindestens einem vorgegebenen zulässigen optischen Parameterbereich.

Vorzugsweise kann eine optische Sensoranordnung die optische Sensoreinrichtung und zusätzlich den mindestens einen optischen Leiter umfassen. Das schwimmfähige Offshore-Bauwerk kann die optische Sensoranordnung (und insbesondere die hiermit überwachte eine Ankerverbindung) umfassen.

Der optische Leiter ist insbesondere ein Lichtwellenleiter, der vorzugsweise als linienförmiger Zustandssensor ausgebildet sein kann. Der optische Leiter kann mindestens eine optische Faser aufweisen, die von einer Schutzschicht umgeben sein kann. Der optische Leiter ist insbesondere eingerichtet, ein Erfassen mindestens eines optischen Parameters zu ermöglichen, der zumindest ein Indiz über den mechanischen bzw. strukturellen Zustand der Ankerverbindung ist.

Beispielsweise können Vibrationen (oder Schallemissionen) der Ankerverbindung erfasst werden. Diese können dann ausgewertet werden, um Rückschlüsse auf den mechanischen bzw. strukturellen Zustand der Ankerverbindung des schwimmfähigen Offshore-Bauwerks zu gewinnen. Insbesondere kann durch den mit der optischen Sensoreinrichtung verbundenen optischen Leiter ein (potentielles oder tatsächliches) Reißen der Ankerverbindung oder zumindest eine mechanische Belastung, bei der mit hoher Wahrscheinlichkeit (> 95 %) ein Reißen droht, detektiert werden.

Der optische Leiter ist insbesondere in der Ankerverbindung integriert, also beispielsweise zumindest von der (äußeren) Ummantelung eines Ankerseils (in radialer Richtung) umgeben bzw. umschlossen. Alternativ oder zusätzlich kann der optische Leiter an der Ankerverbindung durch Führungsmittel (beispielsweise Ösen) entlang geführt sein.

Der optische Leiter kann sich vorzugsweise (in Längsrichtung der Ankerverbindung gesehen) entlang der im Wesentlichen gesamten Ankerverbindung erstrecken. Anders ausgedrückt, kann sich der mindestens eine optische Leiter vorzugsweise im Wesentlichen von einem ersten Ende der Ankerverbindung, welches an der dem Ankeranschluss befestigt ist, bis zu dem anderen Ende der Ankerverbindung erstrecken, wobei das andere Ende mit einem Anker (z.B. ein Fundament) verbunden ist oder dieses aufweisen kann. Hierdurch kann die gesamte Ankerverbindung überwacht werden.

Die optische Sensoreinrichtung kann vorzugsweis auf Basis der optischen Zeitbereichsreflektometrie, auch bekannt unter der englischen Bezeichnung Optical-Time-Domain-Reflectometry (OTDR), betrieben werden.

Vorzugsweise kann die optische Sensoreinrichtung mindestens einen Messsignalgenerator umfassen. Der Messsignalgenerator kann eingerichtet sein zum Einkoppeln eines optischen Messsignals in den mindestens einen optischen Leiter der zu überwachenden Ankerverbindung. Die Sensoreinrichtung kann ein optisches Messmodul umfassen, eingerichtet zum Empfangen und insbesondere Auswerten des in Reaktion auf das optische Messsignal in dem optischen Leiter generierten Sensorsignals. Insbesondere kann das Sensorsignal auf dem Messsignal und dem Zustand des optischen Leiters und damit dem Zustand der Ankerverbindung (z.B. gerissen oder nicht gerissen) basieren. Durch Auswerten des Sensorsignals kann dann eine gerissene Ankerverbindung detektiert werden.

Wie bereits beschrieben wurde, kann die optische Sensoreinrichtung insbesondere nach dem OTDR Verfahren betrieben werden. Beispielsweise kann der Messsignalgenerator als Messsignal mindestens einen Lichtpuls, insbesondere Laserpuls, (mit einer Dauer zwischen z.B. 3 ns bis 20 µs) in den optischen Leiter in Form eines Lichtwellenleiters einkoppeln. Als Sensorsignal kann, insbesondere durch das Messmodul, das Rückstreulicht über der Zeit gemessen werden. Der (kontinuierlich) erfasste optische Parameter kann insbesondere das Sensorsignal z.B. in Form eines erfassten Reflexionsparameters sein, wie ein Rückstreulichtparameter oder ein daraus bestimmter Parameter.

Wie beschrieben wurde, ist der optische Leiter vorzugsweise derart an der Ankerverbindung befestigt, dass bei einem Reißen der Ankerverbindung auch der optische Leiter (zumindest nahezu zeitgleich) reißt. Ein Reißen bzw. Durchtrennen des optischen Leiters bewirkt eine detektierbare Änderung des mindestens einen optischen Parameters. Insbesondere bewirkt ein Reißen des optischen Leiters eine Änderung des erfassten optischen Parameters derart, dass der erfasste optische Parameter(wert) nicht mehr in dem vorgegebenen zulässigen optischen Parameterbereich.

Der zulässige optische Parameterbereich definiert insbesondere einen optischen Parameterbereich, bei dem der optische Leiter und damit die mindestens eine Ankerverbindung intakt sind bzw. nicht gerissen sind. Insbesondere kann mindestens ein optischer Grenzparameterwert vorgegeben sein.

Solange die erfassten optischen Parameterwerte des mindestens einen erfassten optischen Parameters innerhalb des zulässigen Parameterbereichs liegen, kann angenommen werden, dass die mindestens eine Ankerverbindung intakt ist bzw. nicht gerissen ist. Ein Auslösen der Schalteinrichtung kann unterbleiben. Liegt hingegen der mindestens eine erfasste optische Parameterwert außerhalb des zulässigen Parameterbereichs, kann ein Ereignis bzw. ein Parameter detektiert werden, das/der indiziert, dass die mindestens eine Ankerverbindung (potentiell oder tatsächlich) gerissen bzw. getrennt ist (oder unmittelbar mit einer hohen Wahrscheinlichkeit (> 95 %) zu reißen droht).. Eine sichere und besonders genaue Detektion einer insbesondere gerissenen Ankerverbindung kann bereitgestellt werden.

Das optische Auswertemodul kann insbesondere eingerichtet sein, die erfassten optischen Parameterwerte (kontinuierlich) mit dem zulässigen Parameterbereich zu vergleichen. Wenn festgestellt wird, dass die erfassten Parameterwerte außerhalb des zulässigen Positionsbereichs liegt/liegen, kann (unmittelbar) die Schalteinrichtung in beschriebener Weise ausgelöst werden. Eine sichere und besonders genaue Detektion einer insbesondere gerissenen Ankerverbindung kann bereitgestellt werden.

Alternativ oder zusätzlich kann, bei einer Ausführungsform des anmeldungsgemäßen schwimmfähigen Offshore-Bauwerks, die Detektionsanordnung mindestens einen mechanischen Sensor umfassen. Der mechanische Sensor kann eingerichtet sein zum Erfassen mindestens eines mechanischen Parameters eines an der Ankerverbindung zumindest teilweise entlang geführten Messseils. Die Detektionsanordnung kann mindestens ein mechanisches Auswertemodul umfassen. Das mechanische Auswertemodul kann eingerichtet sein zum Detektieren der Ankerverbindungsreißindikation, basierend auf dem mindestens einen erfassten mechanischen Parameter und insbesondere mindestens einem vorgegebenen zulässigen mechanischen Parameterbereich.

Vorzugsweise kann eine mechanische Messanordnung einen mechanischen Sensor und das mindestens eine Messseil umfassen. Das Messseil kann beispielsweise von dem einen Ende der Ankerverbindung zu dem anderen Ende der Ankerverbindung und insbesondere parallel an der Ankerverbindung vorbeigeführt sein.

Das Messseil kann derart an der Ankerverbindung befestigt sein, dass bei einem Reißen der Ankerverbindung auch das Messseil reißt. Vor einem Reißen bzw. Durchtrennen kann sich, insbesondere aufgrund der gerissenen Ankerverbindung, die durch den mechanischen Sensor detektierbare Messseilspannung und/oder die durch den mechanischen Sensor detektierbare Bewegungsstrecke des Messseils ändern. Dies kann durch den mechanischen Sensor erfasst und durch das mechanische Auswertemodul ausgewertet werden. Insbesondere bewirkt ein Reißen der Ankerverbindung eine detektierbare Änderung des erfassten mechanischen Parameters derart, dass der erfasste mechanische Parameter(wert) nicht mehr in dem vorgegebenen zulässigen optischen Parameterbereich.

Der zulässige mechanische Parameterbereich definiert insbesondere einen Parameterbereich (z.B. ein maximal zulässiger Spannungsbereich, eine maximal zulässige Bewegungsstrecke etc.), bei dem die mindestens eine Ankerverbindung intakt ist bzw. nicht gerissen ist. Insbesondere kann mindestens ein optischer Grenzparameterwert (z.B. Spannungsgrenzwert, Bewegungsstreckengrenzwert) vorgegeben sein.

Solange die erfassten mechanischen Parameterwerte des mindestens einen erfassten mechanischen Parameters innerhalb des zulässigen Parameterbereichs liegen, kann angenommen werden, dass die mindestens eine Ankerverbindung intakt ist bzw. nicht gerissen ist. Liegt hingegen der mindestens eine erfasste mechanische Parameterwert außerhalb des zulässigen Parameterbereichs, kann ein Ereignis bzw. ein Parameter detektiert werden, das/der indiziert, dass die mindestens eine Ankerverbindung (potentiell oder tatsächlich) gerissen bzw. getrennt ist (oder unmittelbar mit einer hohen Wahrscheinlichkeit (> 95 %) zu reißen droht)..

Das mechanische Auswertemodul kann insbesondere eingerichtet sein, die erfassten mechanischen Parameterwerte (kontinuierlich) mit dem zulässigen Parameterbereich zu vergleichen. Wenn festgestellt wird, dass die erfassten Parameterwerte außerhalb des zulässigen Positionsbereichs liegt/liegen, kann (unmittelbar) die Schalteinrichtung in beschriebener Weise ausgelöst werden. Eine sichere Detektion insbesondere einer gerissenen Ankerverbindung kann mit einfachem Mitteln bereitgestellt werden.

Wie bereits beschrieben wurde, können die Detektionsanordnung und die Schalteinrichtung miteinander gekoppelt bzw. verbunden sein, um insbesondere einen Schaltvorgang und damit zumindest ein elektrisches Trennen (unmittelbar) bei Detektion einer gerissenen Ankerverbindung auslösen zu können. Gemäß einer weiteren bevorzugten Ausführungsform des anmeldungsgemäßen schwimmfähigen Offshore-Bauwerks kann das schwimmfähige Offshore-Bauwerk mindestens eine zwischen der Detektionsanordnung (insbesondere dem mindestens einen Auswertemodul) und der Schalteinrichtung angeordnete Schnittstelle umfassen. Die mindestens eine Schnittstelle kann eine analoge Schnittstelle und/oder eine digitale Schnittstelle und/oder eine mechanische Schnittstelle sein. Vorzugsweise können zwei unterschiedliche Schnittstellen vorgesehen sein, wie eine analoge und eine digitale Schnittstelle oder eine digitale und eine mechanische Schnittstelle. Hierdurch kann sichergestellt werden, dass auch bei einer defekten Schnittstelle der beschriebene Schaltvorgang ausgelöst werden kann. Vorzugsweise unmittelbar bei Detektion eines gerissenen Ankerseils kann die Detektionsanordnung die Schalteinrichtung über die mindestens eine Schnittstelle ansteuern, derart, dass ein elektrisches Unterbrechen der elektrischen Verbindung zu dem Seeenergiekabel erfolgt.

Bei einer weiteren Ausführungsform des anmeldungsgemäßen schwimmfähigen Offshore-Bauwerks kann ein weiterer mechanischer Sensor auch (unmittelbar) an dem Ankeranschluss angeordnet sein, insbesondere integriert sein. Der weitere mechanische Sensor kann eingerichtet sein zum Erfassen mindestens eines weiteren mechanischen Parameters der Ankerverbindung, wie eine auf den Ankeranschluss (z.B. einem Haltebolzen des Ankeranschlusses) durch die Ankerverbindung ausgeübte Last. Ferner kann das schwimmfähige Offshore-Bauwerk mindestens ein weiteres mechanisches Auswertemodul umfassen. Das weitere mechanische Auswertemodul kann eingerichtet sein zum Detektieren der Ankerverbindungsreißindikation des schwimmfähigen Offshore-Bauwerks, basierend auf dem mindestens einen weiteren erfassten mechanischen Parameter und insbesondere mindestens einem weiteren vorgegebenen zulässigen mechanischen Parameterbereich. Das Detektieren der Ankerverbindungsreißindikation, basierend auf dem mindestens einen weiteren erfassten mechanischen Parameter und insbesondere mindestens einem weiteren vorgegebenen zulässigen mechanischen Parameterbereich, erfolgt insbesondere in analoger Weise zu dem zuvor beschriebenen Detektieren der gerissenen Ankerverbindung des schwimmfähigen Offshore-Bauwerks, basierend auf dem mindestens einen erfassten mechanischen Parameter und insbesondere mindestens einem vorgegebenen zulässigen mechanischen Parameterbereich, so dass zur Vermeidung von Wiederholungen auf die entsprechenden Ausführungen verwiesen wird.

Gemäß einer weiteren besonders bevorzugten Ausführungsform des anmeldungsgemäßen schwimmfähigen Offshore-Bauwerks kann die Schalteinrichtung, insbesondere als Schaltmodul, mindestens einen Lasttrennschalter umfassen. Der mindestens eine Lasttrennschalter ist insbesondere eingerichtet zum Schalten von (elektrischen) Lasten. Ein Lasttrennschalter kann mindestens ein Lichtbogenlöschmodul umfassen. Insbesondere kann an den Schaltkontakten des Lasttrennschalters Lichtbogenlöschmodule angeordnet sein. Vorzugsweise kann die Schalteinrichtung für jedes angeschlossene Seeenergiekabel jeweils mindestens einen Lasttrennschalter umfassen.

Vorzugsweise kann die Schalteinrichtung, insbesondere der mindestens eine Lasttrennschalter, an oder in dem Seeenergiekabelanschluss angeordnet sein. In sicherer und einfacher Weise kann eine elektrische Verbindung zu einem angeschlossenen Seeenergiekabel unterbrochen und damit insbesondere das Seeenergiekabel spannungslos geschaltet werden.

Darüber hinaus kann, gemäß einer weiteren Ausführungsform des schwimmfähigen Offshore-Bauwerks die Schalteinrichtung eingerichtet sein zum mechanischen Trennen des Seeenergiekabels. Ein ungesteuertes Abreißen des spannungsfreien Seeenergiekabels kann verhindert werden. Eine Reparatur des Schadens kann hierdurch erleichtert und die Sicherheit noch weiter verbesswert werden.

Gemäß einer weiteren Ausführungsform des anmeldungsgemäßen schwimmfähigen Offshore-Bauwerks kann das schwimmfähige Offshore-Bauwerk mindestens eine Kommunikationseinrichtung umfassen. Die mindestens eine Kommunikationseinrichtung kann insbesondere mit der Detektionsanordnung gekoppelt sein oder in dieser integriert sein.

Die Kommunikationseinrichtung kann zumindest eingerichtet sein zum Aussenden mindestens einer Alarmnachricht an mindestens ein weiteres über das Seeenergiekabel (bei dem ein elektrisches Trennen durchgeführt wird und insbesondere ein Abreißen erwartet wird) mit dem schwimmfähigen Offshore-Bauwerk verbundenes Bauwerk bei einer Detektion einer Ankerverbindungsreißindikation, insbesondere einer gerissenen Ankerverbindung des schwimmfähigen Offshore-Bauwerks. Die Alarmnachricht kann zumindest Instruktion zum elektrischen Trennen des Seeenergiekabels an dem weiteren Bauwerk enthalten.

Das weitere Bauwerk kann ein (schwimmfähiges) Offshore-Bauwerk oder ein Onshore-Bauwerk sein.

Die Kommunikationseinrichtung kann beispielsweise ein Funkmodul umfassen. Vorzugsweise kann die Kommunikationseinrichtung mit einem (optischen) Kommunikationsleiter des mindestens einen Seeenergiekabels gekoppelt sein zum Übertragen der Alarmnachricht über den (optischen) Kommunikationsleiter. Das weitere Bauwerk kann eine weitere Schalteinrichtung umfassen. Die weitere Schalteinrichtung kann eingerichtet sein zum zumindest elektrischen Trennen der elektrischen Verbindung zu dem an einen weiteren Seeenergiekabelanschluss des weiteren Bauwerks angeschlossenen Seeenergiekabel (unmittelbar) bei Erhalt der Alarmnachricht.

Gemäß einer weiteren Ausführungsform des anmeldungsgemäßen schwimmfähigen Offshore-Bauwerks umfasst die Schalteinrichtung ein mit einem (optischen) Kommunikationsleiter des mindestens einen Seeenergiekabels verbundenes Empfangsmodul. Die Schalteinrichtung, insbesondere das mindestens eine Schaltmodul, kann eingerichtet sein zum zumindest elektrischen Trennen der elektrischen Verbindung zu dem Seeenergiekabel (wie bereits beschrieben wurde), insbesondere unmittelbar bei Erhalt einer Alarmnachricht, insbesondere von einer (zuvor beschriebenen) Kommunikationseinrichtung eines weiteren schwimmfähigen Offshore-Bauwerks.

Gemäß einer weiteren Ausführungsform des anmeldungsgemäßen schwimmfähigen Offshore-Bauwerk kann das schwimmfähige Offshore-Bauwerk mindestens eine Aktivierungsanordnung umfassen, eingerichtet zum Aktivieren von mindestens einem Verbraucher und/oder mindestens einer Energiequelle, bei oder nach einer Detektion einer Ankerverbindungsreißindikation. Das Aktiveren kann unmittelbar erfolgen (insbesondere analog zum Aktivieren der Schalteinrichtung). Insbesondere kann der mindestens eine Verbraucher und/oder die mindestens einer Energiequelle Bestandteil eines Sicherheitssystems des Offshore-Bauwerks sein. Beispielsweise kann der mindestens eine Verbraucher ein Aktor zum Schließen einer Tür (z.B. können aus Sicherheitsgründen Türen bzw. Tore bei einer Detektion automatisch geschlossen werden) und/oder ein Aktor zum Unterbrechen eines Fluidstroms (z.B. Wasserstoffstrom oder ein aus Wasserstoff produzierten Gases; aus Sicherheitsgründen kann ein Aktor insbesondere Ventile oder dergleichen in einem Rohrleitungssystem automatisch schließen) und/oder ein Leuchtmittel (z.B. eine Notbeleuchtung) sein. Die mindestens eine Energiequelle kann beispielsweise eine wiederaufladbare Batterie und/oder ein brennstoffgetriebener Generator (z.B. Dieselgenerator) sein, z.B. eingerichtet zum Versorgen eines vorgenannten (elektrischen) Verbrauchers.

Insbesondere kann in automatischer Weise bei einer entsprechenden Detektion ein Sicherheitssystem des Offshore-Bauwerks (oder eines benachbarten Bauwerks) und/oder ein Brandschutzsystem aktiviert werden.

Gemäß einer weiteren Ausführungsform des anmeldungsgemäßen schwimmfähigen Offshore-Bauwerk kann das schwimmfähige Offshore-Bauwerk mindestens eine Deaktivierungsanordnung umfassen, eingerichtet zum Deaktivieren von mindestens einem Verbraucher (des Offshore-Bauwerks und/oder eines benachbarten Bauwerks) und/oder mindestens einer Energiequelle (des Offshore-Bauwerks und/oder eines benachbarten Bauwerks), bei oder nach einer Detektion einer Ankerverbindungsreißindikation. Das Deaktivieren kann unmittelbar erfolgen (insbesondere analog zum Aktivieren der Schalteinrichtung). Hierbei sind ggf. Ab- bzw. Runterfahrzeiten bzw. -Rampen zu beachten). Insbesondere kann der mindestens eine Verbraucher Bestandteil einer Elektrolyseanlage sein, wie der Elektrolyseur, ein Kompressor, eine Aufbereitungsanlage, eine Pumpe und/oder dergleichen. Insbesondere kann hierdurch der chemische Prozess automatisch bei einer entsprechenden Detektion (schnellstmöglich) gestoppt werden. Ferner kann beispielsweise die mindestens eine Energiequelle ein Windkraftgenerator und/oder eine Photovoltaikanlage sein.

Ein weiterer Aspekt der Anmeldung ist ein (schwimmfähiges) (Offshore-) Energieerzeugungssystem. Das Energieerzeugungssystem umfasst mindestens ein zuvor beschriebenes schwimmfähiges Offshore-Bauwerk. Das Energieerzeugungssystem umfasst mindestens ein (zuvor beschriebenes) Seeenergiekabel. Das Energieerzeugungssystem umfasst mindestens ein weiteres mit dem schwimmfähigen Offshore-Bauwerk über das Seeenergiekabel elektrisch verbundenes (zuvor beschriebenes) Bauwerk.

Das Energieerzeugungssystem kann vorzugsweise ein schwimmfähiges bzw. im Installationszustand schwimmendes Offshore-Windenergiesystem bzw. ein schwimmfähiger bzw. im Installationszustand schwimmender Offshore-Windpark sein. Auch kann das Energieerzeugungssystem ein schwimmfähiges bzw. im Installationszustand schwimmendes Offshore-Photovoltaiksystem oder Offshore-Wasserstoffproduktionssystem sein. Es versteht sich, dass die genannten Systeme miteinander kombiniert werden können. Beispielsweise kann ein Offshore-Windenergiesystem mindestens eine Photovoltaikvorrichtung und/oder mindestens eine Wasserstoffproduktionsvorrichtung umfassen.

Ein noch weiterer Aspekt der Anmeldung ist ein Verfahren. Das Verfahren umfasst:
- Detektieren, durch mindestens eine Detektionsanordnung (eines Offshore-Bauwerks), einer Ankerverbindungsreißindikation (insbesondere einer gerissenen Ankerverbindung eines schwimmfähigen Offshore-Bauwerks), und
- elektrisches Trennen, durch mindestens eine Schalteinrichtung (des Offshore-Bauwerks), der elektrischen Verbindung zu dem an einem Seeenergiekabelanschluss des Offshore-Bauwerks angeschlossenen Seeenergiekabels bei oder nach einer Detektion einer Ankerverbindungsreißindikation.

Ein noch weiterer Aspekt der Anmeldung ist eine Verwendung einer Detektionsanordnung, eingerichtet zum Detektieren einer Ankerverbindungsreißindikation, und mindestens einer Schalteinrichtung, eingerichtet zum zumindest elektrischen Trennen der elektrischen Verbindung zu dem an einem Seeenergiekabelanschluss eines schwimmfähigen Offshore-Bauwerks angeschlossenen Seeenergiekabels bei oder nach einer Detektion einer Ankerverbindungsreißindikation, in dem schwimmfähigen Offshore-Bauwerk.

Die Merkmale der schwimmfähigen Offshore-Bauwerke, Energieerzeugungssysteme, Verfahren und Verwendungen sind frei miteinander kombinierbar. Insbesondere können Merkmale der Beschreibung und/oder der abhängigen Ansprüche, auch unter vollständiger oder teilweiser Umgehung von Merkmalen der unabhängigen Ansprüche, in Alleinstellung oder frei miteinander kombiniert eigenständig erfinderisch sein.

Es gibt nun eine Vielzahl von Möglichkeiten, das anmeldungsgemäße schwimmfähige Offshore-Bauwerk, das anmeldungsgemäße Energieerzeugungssystem, das anmeldungsgemäße Verfahren und die anmeldungsgemäße Verwendung eines Ankerseilsystems auszugestalten und weiterzuentwickeln. Hierzu sei einerseits verwiesen auf die den unabhängigen Patentansprüchen nachgeordneten Patentansprüche, andererseits auf die Beschreibung von Ausführungsbeispielen in Verbindung mit der Zeichnung. In der Zeichnung zeigt:
- Fig. 1: eine schematische Ansicht eines Ausführungsbeispiels eines schwimmfähigen Offshore-Bauwerks gemäß der vorliegenden Anmeldung,
- Fig. 2: eine schematische Ansicht eines weiteren Ausführungsbeispiels eines schwimmfähigen Offshore-Bauwerks gemäß der vorliegenden Anmeldung,
- Fig. 3: eine schematische Ansicht eines weiteren Ausführungsbeispiels eines schwimmfähigen Offshore-Bauwerks gemäß der vorliegenden Anmeldung,
- Fig. 4: eine schematische Ansicht eines weiteren Ausführungsbeispiels eines schwimmfähigen Offshore-Bauwerks gemäß der vorliegenden Anmeldung,
- Fig. 5: eine schematische Ansicht eines weiteren Ausführungsbeispiels eines schwimmfähigen Offshore-Bauwerks gemäß der vorliegenden Anmeldung,
- Fig. 6: eine schematische Ansicht eines Ausführungsbeispiels eines schwimmfähigen Energieerzeugungssystems gemäß der vorliegenden Anmeldung, und
- Fig. 7: ein Diagramm eines Ausführungsbeispiels eines Verfahrens gemäß der vorliegenden Anmeldung.

In den Figuren werden für ähnliche Elemente ähnliche Bezugszeichen verwendet. Zudem wird mit z die vertikale Richtung und mit x eine horizontale Richtung bezeichnet.

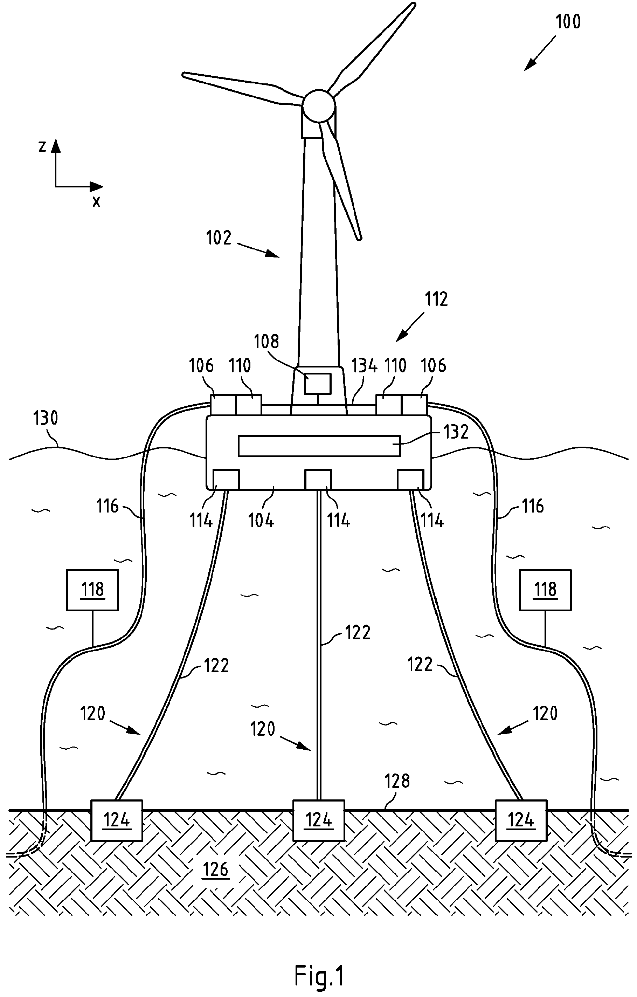

Die Figur 1 zeigt eine schematische Ansicht eines Ausführungsbeispiels eines schwimmfähigen Offshore-Bauwerks 100 bzw. einer schwimmfähigen Offshore-Struktur 100 gemäß der vorliegenden Anmeldung.

Das im Installationszustand gezeigte schwimmfähige Offshore-Bauwerk 100 ist beispielhaft in diesem Ausführungsbeispiel (und den weiteren nachfolgenden Ausführungsbeispielen) eine schwimmfähige bzw. schwimmende Offshore-Windkraftanlage 100.

Die nachfolgenden Ausführungen lassen sich jedoch auf andere schwimmfähige Offshore-Bauwerke, wie eine Offshore-Umspannvorrichtung, eine Offshore-Photovoltaikvorrichtung, eine Offshore-Wasserstoffproduktionsvorrichtung etc., übertragen.

Ein anmeldungsgemäßes schwimmfähiges Offshore-Bauwerk 100 zeichnet sich insbesondere dadurch aus, dass das schwimmfähige Offshore-Bauwerk 100 mindestens einen Seeenergiekabelanschluss 106 und mindestens einen Ankeranschluss 114 aufweist. Der mindestens eine Seeenergiekabelanschluss 106 ist eingerichtet zum Anschließen eines Seeenergiekabels 116. Insbesondere ist an dem mindestens einen Seeenergiekabelanschluss 106 des Offshore-Bauwerks 100 im Betrieb, also insbesondere in einem Installationszustand, des Offshore-Bauwerks 100 mindestens ein Seeenergiekabel 116 angeschlossen.

Nicht dargestellt ist die interne elektrische Verbindung des Seeenergiekabels 116 beispielsweise zu einem Generator, Umrichter etc. des Offshore-Bauwerks 100 (bzw. PV-Anlage, Wasserstoffproduktionsanlage etc.) und/oder dem weiteren Seeenergiekabel 116.

Ein Seeenergiekabel 116 ist vorzugsweise ein Mittelspannungsseekabel (insbesondere zwischen 3 kV bis 30 kV) oder ein Hochspannungsseekabel (60 kV bis 110 kV). Die Leistungskapazität eines anmeldungsgemäßen Seeenergiekabels 116 liegt vorzugsweise zwischen 3 MW und 2,5 GW.

Ein Seeenergiekabel 116 kann beispielsweise drei Phasenleiter zum Übertragen der elektrischen Energie umfassen. Ferner kann mindestens ein Lichtwellenleiter als (optischer) Kommunikationsleiter in dem Seeenergiekabel 116 integriert sein. Es versteht sich, dass ein Seeenergiekabel 116 weitere Kabelelemente aufweist, wie mindestens eine Isolationsschicht, mindestens eine Abschirmschicht, mindestens eine Bewehrungsschicht, einen Außenmantel, Füllmaterial und/oder dergleichen. Vorliegend umfasst das Offshore-Bauwerk 100 ein schwimmfähiges Fundament 104 mit mindestens einem (angedeuteten) Schwimmkörper 132. Auf dem Fundament 104 ist eine Vorrichtung 102 angeordnet, die insbesondere den mindestens einen Seeenergiekabelanschluss 106 aufweisen kann. Bei anderen Varianten der Anmeldung kann ein Seeenergiekabelanschluss auch in oder an dem Fundament 104 angeordnet sein.

Die Vorrichtung 102 ist insbesondere eine elektrische Energieerzeugungsvorrichtung 102. Wie bereits beschrieben wurde, ist die Energieerzeugungsvorrichtung 102 vorliegend beispielhaft eine Windkraftanlage 102, eingerichtet zum Wandeln der kinetischen Energie des Winds in elektrische Energie. Die erzeugte elektrische Energie wird insbesondere über den Seeenergiekabelanschluss 106 in ein Seeenergiekabel 116 eingespeist.

Wie zu erkennen ist, verfügt die Offshore-Windkraftanlage 100 vorliegend beispielhaft über zwei Seeenergiekabelanschlüsse 106, an denen jeweils ein Seeenergiekabel 116 angeschlossen ist. Ein Seeenergiekabel 116 verläuft von einem Seeenergiekabelanschluss 106 vorzugsweise in einer S-Form zu der Oberfläche 128 des Unterwasserbodens 126. Hierzu kann mindestens ein Auftriebskörper 118 vorgesehen und insbesondere an dem Seeenergiekabel 116 befestigt sein. Hierdurch kann ein Längenpuffer bereitgestellt werden.

Wie ferner in der Figur 1 angedeutet, ist das mindestens eine Seeenergiekabel 116 in dem Unterwasserbodens 126 mit einem bestimmten Tiefenbereich verlegt und verläuft insbesondere zu einem weiteren (vorliegend nicht gezeigten) Bauwerk des Energieerzeugungssystem, wie eine weiteres schwimmfähiges oder nicht schwimmfähiges Offshore-Bauwerk oder ein Onshore-Bauwerk.

Darüber hinaus weist das schwimmfähige Offshore-Bauwerk 100 mindestens einen Ankeranschluss 114 auf. Vorliegend sind beispielhaft drei Ankeranschlüsse 114 vorgesehen. An jedem Ankeranschluss 114 ist vorliegend eine Ankerverbindung 122 befestigt. Die Ankerverbindung 122 ist insbesondere ein Teil einer Verankerungsanordnung 120. Das Offshore-Bauwerk 100 kann die mindestens eine Verankerungsanordnung 120 umfassen.

Eine Verankerungsanordnung 120 umfasst insbesondere zumindest eine Ankerverbindung 122 und einen Anker 124. In dem dargestellten Installations- und Betriebszustand des schwimmfähigen Offshore-Bauwerks 100 ist der Anker 124 zumindest teilweise in dem Unterwasserboden 126 verankert. Ein erstes Ende der Ankerverbindung 122 ist an dem Ankeranschluss 114 und das andere Ende der Ankerverbindung 122 an dem Anker 124 befestigt.

Anmeldungsgemäß umfasst das schwimmfähige Offshore-Bauwerk 100 als Sicherheitssystem eine Detektionsanordnung 108 und eine Schalteinrichtung 112. Die Schalteinrichtung 112 umfasst insbesondere mindestens ein Schaltmodul 110, vorzugsweise in Form eines Lasttrennschalters 110. Vorzugsweise kann für jedes angeschlossene Seeenergiekabel 116 mindestens ein Schaltmodul 110 vorgesehen sein, beispielsweise für jeden Phasenleiter von jedem Seeenergiekabel 116 jeweils ein Lasttrennschalter 110. Insbesondere kann das mindestens eine Schaltmodul 110 unmittelbar benachbart zu dem mindestens einen Seeenergiekabelanschluss 106 angeordnet sein oder in dem Seeenergiekabelanschluss 106 integriert sein.

Die Schalteinrichtung 112 ist über mindestens eine Schnittstelle 134 (z.B. eine digitale Schnittstelle, analoge Schnittstelle und/oder mechanische Schnittstelle) mit der Detektionsanordnung 108 verbunden.

Die Detektionsanordnung 108 ist eingerichtet zum Detektieren einer Ankerverbindungsreißindikation, insbesondere einer gerissenen Ankerverbindung 122, und dient somit insbesondere der unmittelbaren und/oder mittelbaren Überwachung der mindestens einen Ankerverbindung 122 des schwimmfähigen Offshore-Bauwerks 100, insbesondere von sämtlichen Ankerverbindungen 122 des schwimmfähigen Offshore-Bauwerks 100. Eine gerissene Ankerverbindung liegt zumindest dann vor, wenn die Verbindung zu dem Anker 124 der Ankeranordnung 120 gelöst ist.

Bei Detektion einer Ankerverbindungsreißindikation erfolgt, durch die Schalteinrichtung 112, zumindest ein elektrisches Trennen (bzw. Abschalten) der elektrischen Verbindung zu dem Seeenergiekabel 116 bzw. ein Unterbrechen des Energieflusses durch das bzw. zu dem Seeenergiekabel 116. Vorzugsweise erfolgt ein entsprechenden elektrisches Trennen bei sämtlichen Seeenergiekabeln 116, die an das schwimmfähige Offshore-Bauwerk 100 angeschlossen sind. Mit anderen Worten, das mindestens eine Seeenergiekabel 116 wird spannungslos geschaltet, vorzugsweise durch Auslösen des mindestens einen Lasttrennschalters 110.

Insbesondere erfolgt das zumindest elektrische Trennen unmittelbar bzw. direkt bei bzw. nach einer Detektion einer gerissenen Ankerverbindung 122. Dies meint, dass die Schalteinrichtung 112 unmittelbar (z.B. < 1 sec) bei bzw. nach Detektion der Ankerverbindungsreißindikation ausgelöst wird, derart, dass das mindestens eine Seeenergiekabel 116 unmittelbar spannungslos geschaltet wird. Bei Varianten der Anmeldung kann die Schalteinrichtung 112 auch innerhalb einer größeren Zeitdauer (z.B. kleiner als 10 Sekunden, vorzugsweise kleiner als 5 Sekunden) bei bzw. nach Detektion der Ankerverbindungsreißindikation ausgelöst werden, derart, dass das mindestens eine Seeenergiekabel 116 spannungslos geschaltet wird.

Mit dem Bezugszeichen 130 ist vorliegend die Wasseroberfläche bezeichnet.

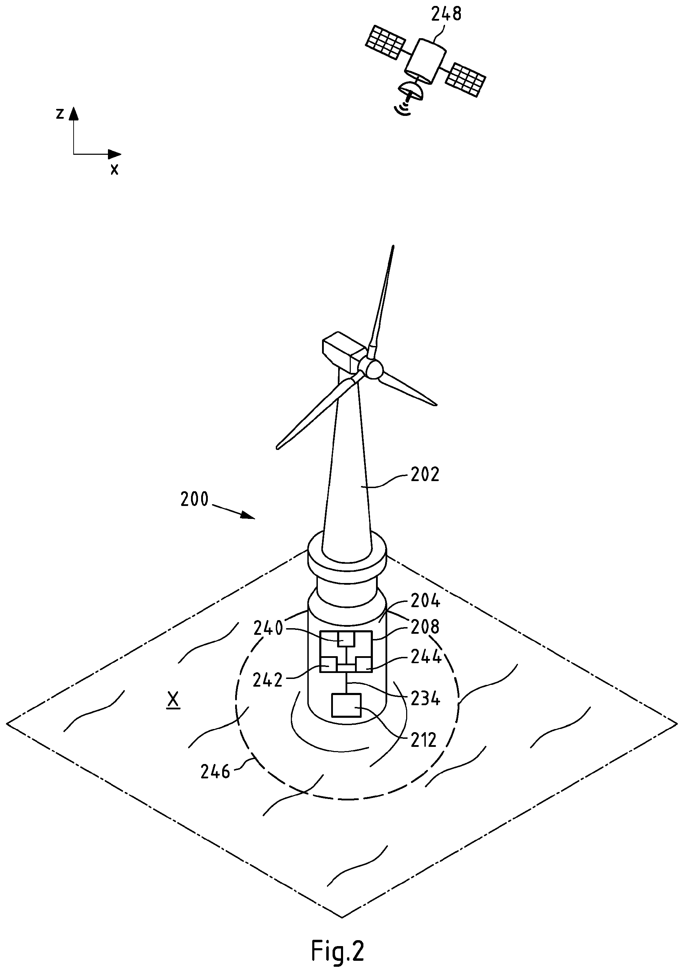

Die Figur 2 zeigt eine schematische Ansicht eines weiteren Ausführungsbeispiels eines schwimmfähigen Offshore-Bauwerks 200 gemäß der vorliegenden Anmeldung. Zur Vermeidung von Wiederholungen werden nachfolgend im Wesentlichen nur die Unterschiede zu dem bereits dargestellten Ausführungsbeispiel beschrieben. Ansonsten wird auf die Ausführungen zur Figur 1 verwiesen. Insbesondere wird angemerkt, dass zu Gunsten einer besseren Übersicht auf die Darstellung von bestimmten Details des schwimmfähigen Offshore-Bauwerks 200, wie Seeenergiekabelanschluss, Ankeranschluss etc. verzichtet wurde.

Die Detektionsanordnung 208 des schwimmfähigen Offshore-Bauwerks 200 umfasst vorliegend mindestens einen Positionssensor 240, mindestens ein Positionsauswertemodul 242 und mindestens ein Speichermodul 244. Der mindestens eine Positionssensor 240 ist insbesondere eingerichtet zum Erfassen (insbesondere Messen) der (augenblicklichen) geographischen Position des schwimmfähigen Offshore-Bauwerks 200. Der mindestens eine Positionssensor 240 ist vorliegend ein satellitenbasierter Positionssensor 240 (z.B. GPS-Sensor, Galileo-Sensor etc.). Satelliten 248 können codierte Signale kontinuierlich aussenden. Aus den in den Signalen enthaltenen Informationen kann der Positionssensor 240 die augenblickliche Position des schwimmfähigen Offshore-Bauwerks 200 insbesondere berechnen.

Der mindestens eine Positionssensor 240 ist insbesondere zur im Wesentlichen kontinuierlichen Erfassung bzw. Berechnung der augenblicklichen Position des schwimmfähigen Offshore-Bauwerks 200 eingerichtet.

Das dargestellte Positionsauswertemodul 242 ist eingerichtet zum Auswerten der erfassten Position, um insbesondere das Vorliegen einer Ankerverbindungsreißindikation zu detektieren. Insbesondere basiert die Detektion einer Ankerverbindungsreißindikation auf der erfassten geographischen Position und einem vorgegebenen zulässigen geographischen Positionsbereich des schwimmfähigen Offshore-Bauwerks 200. Dieser Positionsbereich bzw. die entsprechenden Positionsdaten können insbesondere in dem Speichermodul 244 gespeichert sein. Auf das Speichermodul 244 kann das Positionsauswertemodul 242 zugreifen.

Der geographische zulässige Positionsbereich ist insbesondere der maximal mögliche Bewegungsbereich, in dem sich das schwimmfähige Offshore-Bauwerk 200 im Installationszustand des schwimmfähigen Offshore-Bauwerks 200 maximal bewegen kann, ohne das eine Ankerverbindung gerissen ist. Dieser Bereich ist in der Figur 2 durch die gestrichelte Linie 246 angedeutet. Wenn insbesondere eine Ankerverbindung beispielsweise von einer Mehrzahl von Ankerverbindung reißt, dann vergrößert sich der maximal mögliche Bewegungsbereich des schwimmfähigen Offshore-Bauwerks 200, so dass sich das schwimmfähige Offshore-Bauwerk 200 bei einer gerissenen Ankerverbindung außerhalb des Bereichs 246 befinden kann. Über eine Positionsüberwachung kann daher eine Ankerverbindungsreißindikation. insbesondere eine gerissene Ankerverbindung, zuverlässig detektiert werden, wie noch näher beschrieben wird.

Insbesondere kann der zulässige Positionsbereich vor der Inbetriebnahme des schwimmfähigen Offshore-Bauwerks 200 bestimmt werden. Der zulässige Positionsbereich kann insbesondere von Parametern abhängen, wie der Länge der mindestens einen Ankerverbindung, der Anzahl der angeschlossenen Ankerverbindungen, einem vorgesehenen Längenpuffer des mindestens einen Seeenergiekabels und/oder dergleichen. Beispielsweise ist der maximale Bewegungsradius eines schwimmfähigen Offshore-Bauwerks 200 umso größer, je länger die Ankerverbindungen sind bzw. je größer die Wassertiefe an dem Installationsort des Offshore-Bauwerks ist.

Das Seeenergiekabel kann einen entsprechenden Längenpuffer haben, beispielsweise einen S-förmigen Verlauf aufweisen, wie er in der Figur 1 dargestellt ist. Bei einem sich in dem maximalen Bewegungsradius bzw. zulässigen Positionsbereich bewegendes Offshore-Bauwerk 200 ist sichergestellt, dass das Seeenergiekabel nicht beschädigt wird.

Die erfasste geographische Position bzw. die erfassten Positionsdaten, insbesondere in Form von geografischen Koordinaten (z.B. GPS-Daten), werden vorliegend (kontinuierlich) dem Positionsauswertemodul 242 bereitgestellt. Das Positionsauswertemodul 242 kann die bereitgestellten Positionsdaten (kontinuierlich) mit dem zulässigen Positionsbereich, der ebenfalls durch Positionsdaten definiert sein kann, vergleichen.

Wenn die erfassten Positionsdaten innerhalb des zulässigen Positionsbereichs liegen bzw. den zulässigen Positionsbereich erfüllen (also das schwimmfähige Offshore-Bauwerk 200 innerhalb des Bereichs 246 positioniert ist), kann festgestellt werden, dass die mindestens eine Ankerverbindung intakt ist bzw. nicht gerissen ist. Ein Auslösen der Schalteinrichtung 212 unterbleibt.

Liegen hingegen die Positionsdaten des Offshore-Bauwerks 200 außerhalb des zulässigen Positionsbereichs bzw. erfüllen diesen nicht (in diesem Fall befindet sich das schwimmfähige Offshore-Bauwerk 200 außerhalb des Bereichs 246, beispielsweise an der Position X),kann ein Ereignis bzw. ein Parameter detektiert werden, das/der indiziert, dass die mindestens eine Ankerverbindung (potentiell oder tatsächlich) gerissen bzw. getrennt ist (oder unmittelbar mit einer hohen Wahrscheinlichkeit zu reißen droht).

Wie beschrieben wurde, ist das Positionsauswertemodul 242 insbesondere eingerichtet, die erfasste Position bzw. die erfassten Positionsdaten kontinuierlich mit dem zulässigen Positionsbereich zu vergleichen. Wenn festgestellt wird, dass die erfasste Position bzw. die erfassten Positionsdaten des schwimmfähigen Offshore-Bauwerks 200 außerhalb des zulässigen Positionsbereichs liegt/liegen, kann vorzugsweise unmittelbar die Schalteinrichtung 212 in beschriebener Weise ausgelöst bzw. angesteuert werden.

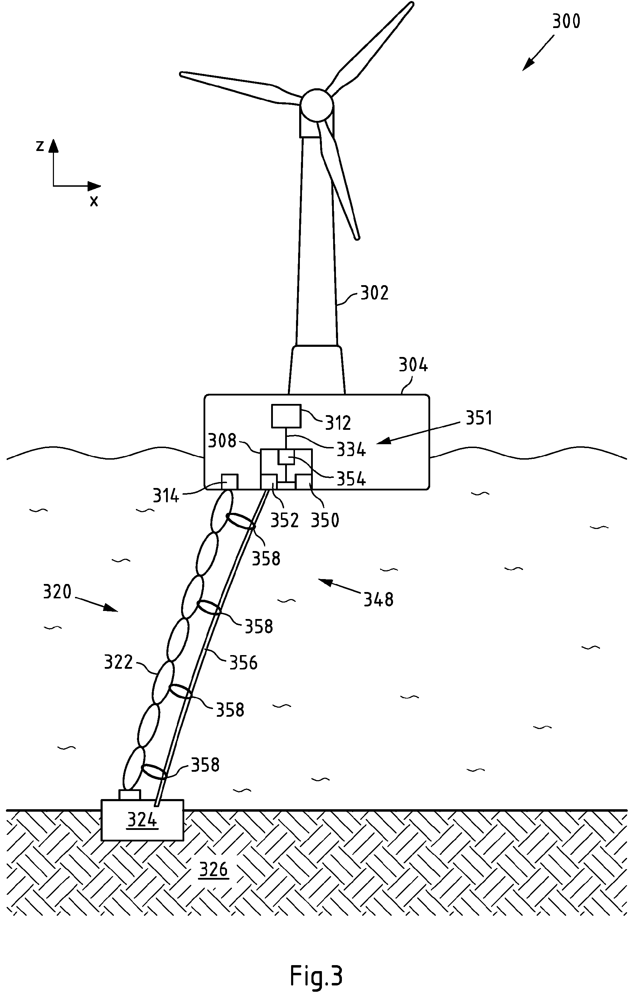

Die Figur 3 zeigt eine schematische Ansicht eines weiteren Ausführungsbeispiels eines schwimmfähigen Offshore-Bauwerks 300 gemäß der vorliegenden Anmeldung. Zur Vermeidung von Wiederholungen werden nachfolgend im Wesentlichen nur die Unterschiede zu den bereits dargestellten Ausführungsbeispielen beschrieben. Ansonsten wird auf die Ausführungen zur Figur 1 und/oder 2 verwiesen.

Insbesondere wird angemerkt, dass zu Gunsten einer besseren Übersicht auf die Darstellung von bestimmten Details, wie Seeenergiekabelanschluss, Seeenergiekabel etc. verzichtet wurde. Auch wurde beispielhaft zur besseren Übersicht nur eine Verankerungsanordnung 320 dargestellt. Es versteht sich, dass zwei oder mehr Verankerungsanordnungen vorgesehen sein können.

Das schwimmfähige Offshore-Bauwerk 300 umfasst eine Detektionsanordnung 308. Die Detektionsanordnung 308 umfasst vorliegend eine elektrische Sensoreinrichtung 351 und ein elektrisches Auswertemodul 354. Die elektrische Sensoreinrichtung 351 umfasst insbesondere einen Generator 350 und ein Messmodul 352.

Als Ankerverbindung 322 ist vorliegend beispielhaft eine Ankerkette 322 vorgesehen. Bei Varianten der Anmeldung kann auch ein Ankerseil als Ankerverbindung vorgesehen sein.

Darüber hinaus ist in dem vorliegenden Ausführungsbeispiel eine elektrische Sensoranordnung 348 vorgesehen, die durch die elektrische Sensoreinrichtung 351 und mindestens einen elektrischen (Mess-) Leiter 356 gebildet sein kann. Das schwimmfähige Offshore-Bauwerk 300 kann die mindestens eine elektrische Sensoranordnung 348 und/oder die mindestens eine Verankerungsanordnung 320 umfassen.

Die elektrische Sensoranordnung 348 umfasst mindestens einen elektrischen Leiter 356. Der elektrische Leiter 356 kann zumindest teilweise entlang der Ankerverbindung 322 geführt sein. Wie aus der Figur 3 zu erkennen ist, ist vorliegend der elektrische Leiter 356 an der gesamten Länge der Ankerverbindung 322 vorbeigeführt, also von dem ersten mit dem Ankeranschluss 314 verbundenen Ende der Ankerverbindung 322 bis zu dem anderen Ende Ankerverbindung 322, das mit dem Anker 324 verbunden ist. Hierzu kann insbesondere eine Mehrzahl von Ösen 358 an der Ankerkette 322 angeordnet sein. Der elektrische Leiter 356 kann durch die Ösen 356 geführt sein, wobei ein erstes Ende des elektrischen Leiters 356 mit der Detektionsanordnung 308 verbunden sein kann und das andere Ende des elektrischen Leiters beispielsweise an dem Anker 324. Insbesondere kann das andere Ende des elektrischen Leiters 356 in den Anker 324 hineinragen, derart, dass bei einem Abreißen des elektrischen Leiters 356 von dem Anker stets ein Teil des elektrischen Leiters 356 in dem Anker 324 verbleibt.

Der elektrische Leiter 356 kann eine Isolierung in Form einer Schutzschicht und insbesondere eine Hinleitung und eine Rückleitung aufweisen, die elektrisch isoliert voneinander sind. Das erste Ende der Hinleitung kann mit dem Generator 350 verbunden sein, das andere Ende im Bereich des anderen bzw. unteren Endes des elektrischen Leiters 356 mit dem anderen Ende der Rückleitung verbunden sein und das erste Ende der Rückleitung kann mit dem Generator 350 verbunden sein, so dass insbesondere ein geschlossenen Stromkreis gebildet ist. Ferner kann das Messmodul 352 mit den ersten Enden der Hinleitung und der Rückleitung gekoppelt sein, um einen anliegenden elektrischen Parameter zu messen.

Der Generator 350 ist insbesondere eingerichtet zum Beaufschlagen des elektrischen Leiters 356 mit einer bestimmten Spannung und/oder einem bestimmten Strom. Beispielsweise kann eine bestimmte Spannung an die Hinleitung und die Rückleitung angelegt werden. Das Messmodul 352 ist insbesondere eingerichtet zum Erfassen, insbesondere Messen, mindestens eines an dem elektrischen Leiter 356 anliegenden elektrischen Parameters (z.B. Spannung, Strom, Magnetfeld, elektrisches Feld etc.). Beispielsweise kann das Messmodul 352 den Strom messen.

Wenn es zu einem Reißen der Ankerverbindung 322 kommt, dann reißt insbesondere auch der elektrische Leiter 356. Das Reißen des elektrischen Leiters 356 führt insbesondere zu einer messbaren Änderung des an dem elektrischen Leiter 356 anliegenden elektrischen Parameters. Insbesondere kann ein zulässiger elektrischer Parameterbereich vorgegeben sein. Dieser kann insbesondere von dem (vorgegebenen) angelegten elektrischen Parameter, dem Widerstand des elektrischen Leiters 356 und/oder der Länge des elektrischen Leiters 356 abhängen.

Der zulässige elektrische Parameterbereich definiert insbesondere einen Parameterbereich, bei dem die mindestens eine Ankerverbindung 322 intakt ist bzw. als nicht gerissen gilt. Insbesondere kann mindestens ein elektrischer Grenzparameterwert vorgegeben sein.

Solange die erfassten elektrischen Parameterwerte des mindestens einen erfassten elektrischen Parameters innerhalb des zulässigen Parameterbereichs liegen, also beispielswiese den Grenzparameterwert nicht übersteigen (oder unterschreiten), kann angenommen werden, dass die mindestens eine Ankerverbindung 322 intakt ist. Liegt hingegen der mindestens eine erfasste elektrische Parameterwert außerhalb des zulässigen Parameterbereichs, wenn also beispielsweise der erfasste elektrische Parameterwert den Grenzparameterwert übersteigt (oder unterschreitet), kann ein Ereignis bzw. ein Parameter detektiert werden, das/der indiziert, dass die mindestens eine Ankerverbindung 322 (potentiell oder tatsächlich) gerissen bzw. getrennt ist (oder unmittelbar mit einer hohen Wahrscheinlichkeit zu reißen droht).. Dann kann in vorbeschriebener Weise die Schalteinrichtung 312 ausgelöst werden.

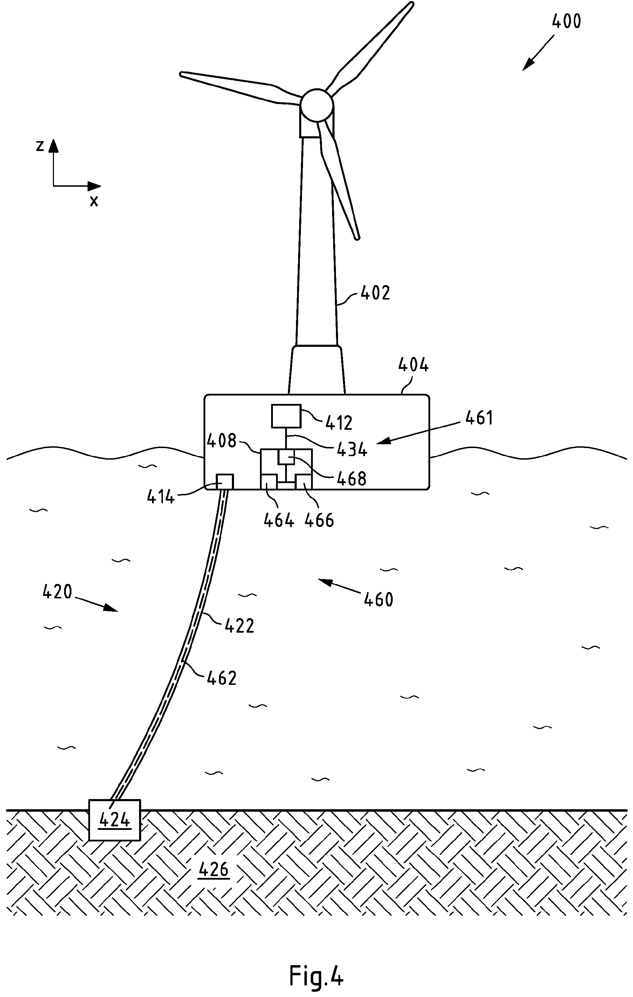

Die Figur 4 zeigt eine schematische Ansicht eines weiteren Ausführungsbeispiels eines schwimmfähigen Offshore-Bauwerks 400 gemäß der vorliegenden Anmeldung. Zur Vermeidung von Wiederholungen werden nachfolgend im Wesentlichen nur die Unterschiede zu den bereits dargestellten Ausführungsbeispielen beschrieben. Ansonsten wird auf die Ausführungen zur Figur 1, 2 und/oder 3 verwiesen. Insbesondere wird angemerkt, dass zu Gunsten einer besseren Übersicht auf die Darstellung von bestimmten Details, wie Seeenergiekabelanschluss, Seeenergiekabel etc. verzichtet wurde. Auch wurde beispielhaft zur besseren Übersicht nur eine Verankerungsanordnung 420 dargestellt. Es versteht sich, dass zwei oder mehr Verankerungsanordnungen vorgesehen sein können.

Insbesondere ist in dem dargestellten Ausführungsbeispiel als Ankerverbindungsstruktursensor eine optische Sensoreinrichtung 461 vorgesehen anstelle einer elektrischen Sensoreinrichtung, wie in Figur 3.

Die optische Sensoreinrichtung 461 umfasst vorliegend einen Messsignalgenerator 464 und ein Messmodul 466. Die Detektionsanordnung 408 umfasst neben der optischen Sensoreinrichtung 461 ein optisches Auswertemodul 468.

Ferner ist vorliegend die mindestens eine Ankerverbindung 422 als Ankerseil 422 gebildet. Ein optischer Leiter 462 in Form eines Lichtwellenleiters 462 ist vorliegend in dem Ankerseil 422 integriert. Wie zu erkennen ist, verläuft der Lichtwellenleiter 462 in der dargestellten bevorzugten Ausführungsform von dem ersten an dem Ankeranschluss 414 befestigten Ende des Ankerseils 422 bis zu dem anderen an dem Anker 424 befestigten Ende des Ankerseils 422. Insbesondere kann das erste Ende des Lichtwellenleiters mit der Sensoreinrichtung 461 gekoppelt sein. Sensoreinrichtung 461 und Lichtwellenleiter 462 können eine optische Sensoranordnung bilden. Das andere Ende des Lichtwellenleiters 462 kann an dem Anker 424 befestigt sein. Insbesondere kann das andere Ende des optischen Leiters 462 in den Anker 424 hineinragen, derart, dass bei einem Abreißen des optischen Leiters 462 von dem Anker 424 stets ein Teil des optischen Leiters 462 in dem Anker 424 verbleibt.

Der Messsignalgenerator 464 ist vorliegend eingerichtet zum Einkoppeln eines optischen Messsignals in den mindestens einen optischen Leiters 462 der zu überwachenden Ankerverbindung 422. Das optische Messmodul 466 ist vorliegend eingerichtet zum Empfangen und insbesondere Auswerten des in Reaktion auf das optische Messsignal in dem optischen Leiter 462 generierten Sensorsignals. Insbesondere kann die Auswertung auf dem Messsignal und dem Sensorsignal basieren, welches das Messsignal bewirkt hat, um festzustellen, ob eine Ankerverbindung 422 gerissen ist oder nicht.

Das dargestellte optische Auswertemodul 468 ist eingerichtet zum Detektieren der gerissenen Ankerverbindung 422, basierend auf dem mindestens einen erfassten optischen Parameter und mindestens einem vorgegebenen zulässigen optischen Parameterbereich.

Die optische Sensoreinrichtung 461 wird vorliegend insbesondere nach dem OTDR Verfahren betrieben. Beispielsweise kann der Messsignalgenerator 464 als Messsignal mindestens einen Lichtpuls, insbesondere Laserpuls, (mit einer Dauer zwischen z.B. 3 ns bis 20 µs) in den optischen Leiter 462 einkoppeln. Als Sensorsignal kann, insbesondere durch das Messmodul 466, das Rückstreulicht über der Zeit gemessen werden. Die Zeitabhängigkeit des Sensorsignals kann beispielsweise in eine Ortsabhängigkeit umgerechnet werden, so dass eine ortsaufgelöste Bestimmung des mechanischen strukturellen Zustands der Ankerverbindung 422 (beispielsweise anhand der aus dem Messsignale gewonnenen Vibrationsdaten, Schalldaten etc.) erfolgen kann. Der (kontinuierlich) erfasste optische Parameter ist insbesondere das Sensorsignal und kann beispielsweise ein erfasster Reflexionsparameter sein, wie ein Rückstreulichtparameter oder ein daraus bestimmter Parameter sein.

Der optische Leiter 462 ist derart an der Ankerverbindung 422 befestigt, vorliegend insbesondere integriert, dass bei einem Reißen der Ankerverbindung 422 auch der optische Leiter 462 (zeitgleich) reißt. Ein Reißen bzw. Durchtrennen des optischen Leiters 462 bewirkt eine detektierbare Änderung des mindestens einen erfassten optischen Parameters. Insbesondere bewirkt ein Reißen des optischen Leiters 462 eine Änderung des erfassten optischen Parameters derart, dass der erfasste optische Parameter(wert) nicht mehr in dem vorgegebenen zulässigen optischen Parameterbereich.

Der zulässige optische Parameterbereich definiert insbesondere einen Parameterbereich, bei dem die mindestens eine Ankerverbindung 422 intakt ist bzw. nicht gerissen ist. Insbesondere kann mindestens ein optischer Grenzparameterwert vorgegeben sein.

Solange die erfassten optischen Parameterwerte des mindestens einen erfassten optischen Parameters innerhalb des zulässigen Parameterbereichs liegen, also insbesondere den optischen Grenzparameterwert nicht überschreiten (oder unterschreiten), kann angenommen werden, dass die mindestens eine Ankerverbindung intakt ist bzw. nicht gerissen ist. Liegt hingegen der mindestens eine erfasste optische Parameterwert außerhalb des zulässigen Parameterbereichs, kann angenommen bzw. ein Ereignis detektiert werden, wenn beispielweise der optische Grenzparameterwert überschritten (oder unterschritten) wird, dass die mindestens eine Ankerverbindung 422 (potentiell oder tatsächlich) gerissen bzw. getrennt ist (oder unmittelbar mit einer hohen Wahrscheinlichkeit zu reißen droht). Dann kann in vorbeschriebener Weise die Schalteinrichtung 412 ausgelöst wird.

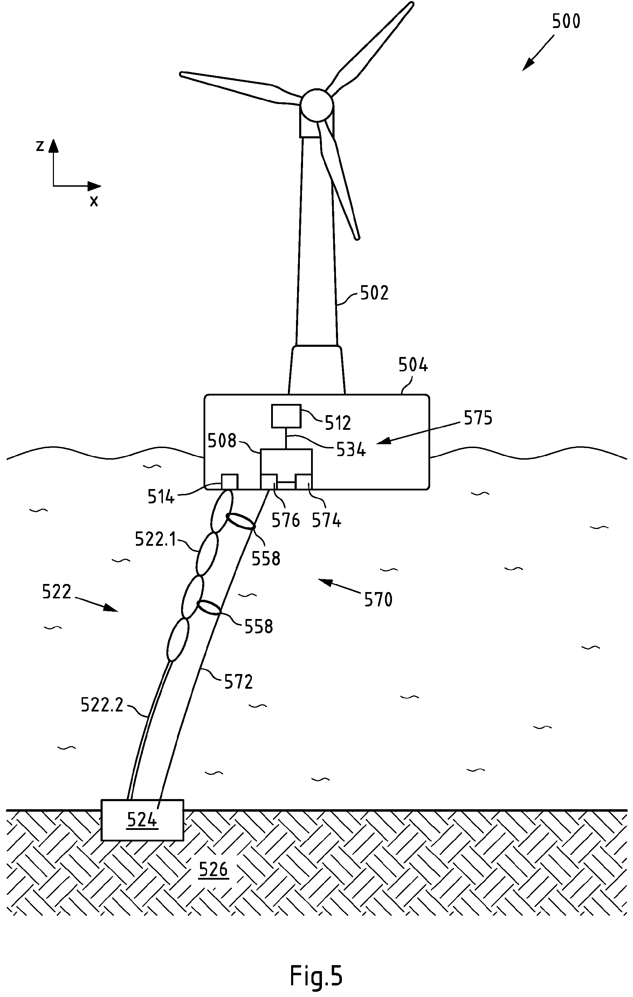

Die Figur 5 zeigt eine schematische Ansicht eines weiteren Ausführungsbeispiels eines schwimmfähigen Offshore-Bauwerks 500 gemäß der vorliegenden Anmeldung. Zur Vermeidung von Wiederholungen werden nachfolgend im Wesentlichen nur die Unterschiede zu den bereits dargestellten Ausführungsbeispielen beschrieben. Ansonsten wird auf die Ausführungen zur Figur 1, 2, 3 und/oder 4 verwiesen. Insbesondere wird angemerkt, dass zu Gunsten einer besseren Übersicht auf die Darstellung von bestimmten Details, wie Seeenergiekabelanschluss, Seeenergiekabel etc. verzichtet wurde. Auch wurde beispielhaft zur besseren Übersicht nur eine Verankerungsanordnung 520 dargestellt. Es versteht sich, dass zwei oder mehr Verankerungsanordnungen vorgesehen sein können.

Insbesondere ist in dem dargestellten Ausführungsbeispiel als Ankerverbindungsstruktursensor eine mechanisch Sensoreinrichtung 575 anstelle einer elektrischen Sensoreinrichtung, wie in Figur 3, oder einer optischen Sensoreinrichtung, wie in Figur 4. Bei Varianten der Anmeldung kann eine Mehrzahl von unterschiedlichen Sensoreinrichtungen vorgesehen sein.

Vorliegend ist die Ankerverbindung 522 beispielhaft eine Kombination aus einer Ankerkette 522.1 und einem Ankerseil 522.2. Ein Messseil 572 ist gemäß dem dargestellten bevorzugten Ausführungsbeispiel entlang der gesamten Länge der Ankerverbindung 522 vorbeigeführt, beispielsweise unter Nutzung von Ösen als Führungselemente. Das erste Ende kann mit der mechanischen Sensoreinrichtung 575 gekoppelt sein. Sensoreinrichtung 575 und Messseil 572 können eine mechanische Sensoranordnung bilden. Das andere Ende des Messseils 572 kann an dem Anker 524 befestigt sein.

Die mechanische Sensoreinrichtung 575 ist vorliegend insbesondere durch einen mechanischen Sensor 576 gebildet, der mit dem Messseil 572 gekoppelt ist. Der mechanische Sensor 576 ist insbesondere eingerichtet zum Erfassen mindestens eines mechanischen Parameters des Messseils 572.

Die Detektionsanordnung 508 umfasst ferner vorliegend mindestens ein mechanisches Auswertemodul 574. Das mechanische Auswertemodul 574 kann eingerichtet sein zum Detektieren der gerissenen Ankerverbindung 522, basierend auf dem mindestens einen erfassten mechanischen Parameter und mindestens einem vorgegebenen zulässigen mechanischen Parameterbereich.

Das Messseil 572 kann derart an der Ankerverbindung 522 befestigt sein, dass bei einem Reißen der Ankerverbindung 522 auch das Messseil 572 reißt. Vor einem Reißen bzw. Durchtrennen des Messseils 572 kann sich, insbesondere aufgrund der gerissenen Ankerverbindung 522, die durch den mechanischen Sensor 576 detektierbare Messseilspannung und/oder die durch den mechanischen Sensor 576 detektierbare Bewegungsstrecke des Messseils 572 ändern. Dies kann durch den mechanischen Sensor 576 erfasst und durch das mechanische Auswertemodul 574 ausgewertet werden. Insbesondere bewirkt ein Reißen der Ankerverbindung 522 eine Änderung des erfassten mechanischen Parameters derart, dass der erfasste mechanische Parameter(wert) nicht mehr in dem vorgegebenen zulässigen optischen Parameterbereich.

Der zulässige mechanische Parameterbereich definiert insbesondere einen Parameterbereich (z.B. ein maximal zulässiger Spannungsbereich, ein maximal zulässige Bewegungsstrecke etc.), bei dem die mindestens eine Ankerverbindung 522 intakt ist bzw. nicht gerissen ist. Insbesondere kann mindestens ein mechanischer Grenzparameterwert (z.B. Spannungsgrenzwert, Bewegungsstreckengrenzwert) vorgegeben sein.

Solange die erfassten mechanischen Parameterwerte des mindestens einen erfassten mechanischen Parameters innerhalb des zulässigen Parameterbereichs liegen, also insbesondere der Grenzparameterwert nicht überschritten (oder unterschritten) ist, kann angenommen werden, dass die mindestens eine Ankerverbindung 522 intakt ist bzw. nicht gerissen ist. Liegt hingegen der mindestens eine erfasste mechanische Parameterwert außerhalb des zulässigen Parameterbereichs, wenn also beispielsweise der Grenzparameterwert überschritten (oder unterschritten) ist, kann ein Ereignis bzw. ein Parameter detektiert werden, das/der indiziert, dass die mindestens eine Ankerverbindung 522 (potentiell oder tatsächlich) gerissen bzw. getrennt ist (oder unmittelbar mit einer hohen Wahrscheinlichkeit zu reißen droht). Dann kann vorzugsweise unmittelbar die Schalteinrichtung 512 ausgelöst werden, wie zuvor beschrieben wurde.

Die beschriebenen Ausführungsbeispiele der Figuren 2 bis 5 können miteinander kombiniert werden. Beispielsweise kann das Ausführungsbeispiel der Figur 2 mit einem Ausführungsbeispiel der Figuren 3 bis 5 kombiniert werden. Hierdurch kann beispielsweise auch bei einem fehlerhafte Positionssensor oder einem fehlerhaften Ankerverbindungsstruktursensor eine Ankerverbindungsreißindikation, insbesondere eine gerissene Ankerverbindung, zuverlässig detektiert werden. Auch kann bei Varianten der Anmeldung ein weiterer (nicht gezeigter) mechanischer Sensor (unmittelbar) an dem Ankeranschluss angeordnet sein, insbesondere integriert sein, eingerichtet sein zum Erfassen mindestens eines weiteren mechanischen Parameters der Ankerverbindung, wie eine auf den Ankeranschluss (z.B. einem Haltebolzen des Ankeranschlusses) durch die Ankerverbindung ausgeübte Last. Ein weiteres mechanisches Auswertemodul kann eingerichtet sein zum Detektieren Ankerverbindungsreißindikation, basierend auf dem mindestens einen weiteren erfassten mechanischen Parameter und insbesondere mindestens einem weiteren vorgegebenen zulässigen mechanischen Parameterbereich.

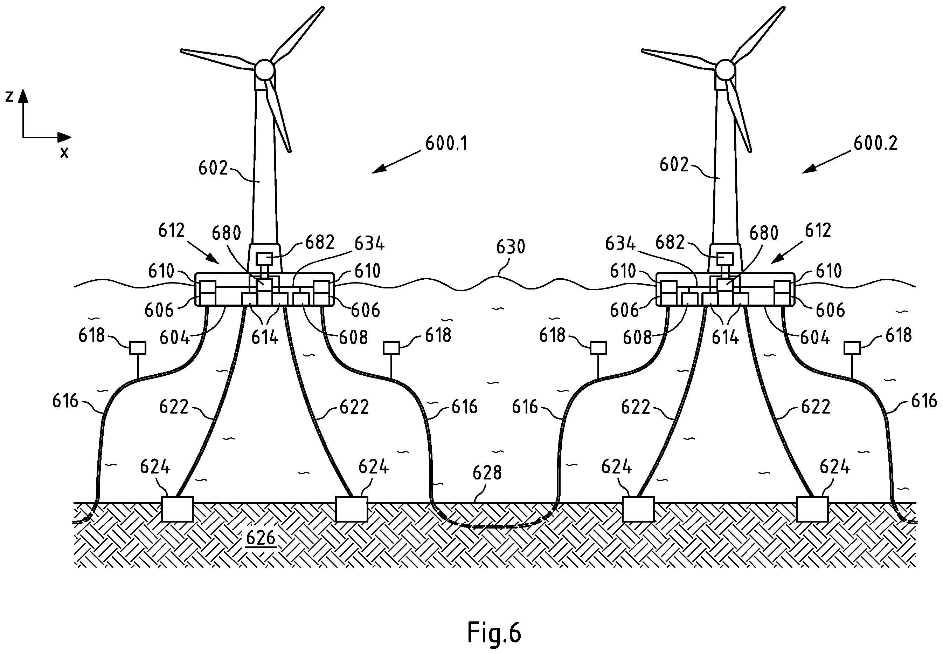

Die Figur 6 zeigt eine schematische Ansicht eines Ausführungsbeispiels eines schwimmfähigen Energieerzeugungssystems 684 gemäß der vorliegenden Anmeldung.

Zur Vermeidung von Wiederholungen werden nachfolgend im Wesentlichen nur die Unterschiede zu den bereits beschriebenen Ausführungsbeispielen beschrieben. Ansonsten wird auf die Ausführungen zur Figur 1, 2, 3, 4 und/oder 5 verwiesen. Insbesondere wird angemerkt, dass zu Gunsten einer besseren Übersicht auf die Darstellung von bestimmten Details verzichtet wurde. Insbesondere kann die Detektion eines Ankerverbindungsrisses entsprechend den Ausführungen zur Figur 1, 2, 3, 4 und/oder 5.

Das Energieerzeugungssystem 684 umfasst mindestens ein schwimmfähiges Offshore-Bauwerk 600.1 mit einer anmeldungsgemäßen Schalteinrichtung 612 und einer anmeldungsgemäßen Detektionsanordnung 608 (vgl. insbesondere Fig. 1 bis 5).

Ferner umfasst das Energieerzeugungssystem 684 mindestens ein zuvor beschriebenes Seeenergiekabel 616 und mindestens ein weiteres mit dem schwimmfähigen Offshore-Bauwerk 600.1 über das Seeenergiekabel 616 elektrisch verbundenes Bauwerk 600.2. Das weitere Bauwerk 600.2 ist vorliegend beispielhaft als weiteres schwimmfähiges Offshore-Bauwerk 600.2 gebildet, welches im Wesentlichen identisch wie das erste schwimmfähige Offshore-Bauwerk 600.1 gebildet ist.

Die Schalteinrichtung 612 eines schwimmfähigen Offshore-Bauwerk 600.1, 600.2 umfasst neben dem mindestens einen Schaltmodul 610 vorliegend insbesondere ein Empfangsmodul 680. Das Empfangsmodul 680 ist vorliegend insbesondere mit dem (optischen) Kommunikationsleiter des mindestens einen angeschlossenen Seeenergiekabels 616 verbunden, vorzugsweise mit sämtlichen an dem jeweiligen schwimmfähigen Offshore-Bauwerk 600.1, 600.2 angeschlossenen Seeenergiekabeln 616. Bei anderen Varianten der Anmeldung kann alternativ oder zusätzlich ein drahtlos betreibbares Empfangsmodul (z.B. ein Funkmodul) vorgesehen sein.

Darüber hinaus umfasst in dem vorliegenden Ausführungsbeispiel ein schwimmfähiges Offshore-Bauwerk 600.1, 600.2 eine Kommunikationseinrichtung 682. Die Kommunikationseinrichtung 682 kann vorzugsweise mit der Detektionsanordnung 608 gekoppelt sein. Vorzugsweise zusätzlich kann die Kommunikationseinrichtung 682 mit dem (optischen) Kommunikationsleiter des mindestens einen angeschlossenen Seeenergiekabels 616 verbunden sein, vorzugsweise mit sämtlichen an dem schwimmfähigen Offshore-Bauwerk 600.1, 600.2 angeschlossenen Seeenergiekabeln 616. Bei anderen Varianten der Anmeldung kann alternativ oder zusätzlich eine drahtlos betreibbare Kommunikationseinrichtung (z.B. Funkmodul) vorgesehen sein.

Bei Varianten der Anmeldung kann das Empfangsmodul in der Kommunikationseinrichtung integriert sein.

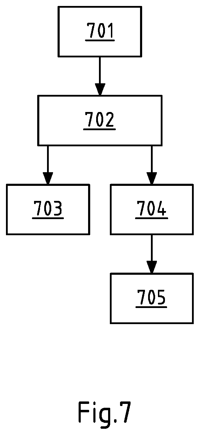

Eine beispielhafte Funktionsweise wird nachfolgend näher mit Hilfe der Figur 7 beschrieben. Die Figur 7 zeigt ein Diagramm eines Ausführungsbeispiels eines Verfahrens gemäß der vorliegenden Anmeldung.

Grundsätzlich kann durch die anmeldungsgemäße Detektionsanordnung kontinuierlich der Zustand der mindestens einen Ankerverbindung überwacht werden. Insbesondere kann kontinuierlich überprüft werden, ob der mindestens eine erfasste Parameter (z.B. geographische Position, elektrischer Parameter, optischer Parameter und/oder mechanischer Parameter) den mindestens einen zulässigen Parameterbereich (z.B. Positionsbereich, elektrischer Parameterbereich, optischer Parameterbereich und/oder mechanischer Parameterbereich) erfüllt. Insbesondere können die kontinuierlich erfassten Parameterwerte des mindestens einen Parameters kontinuierlich mit dem mindestens einen zulässigen Parameterbereich verglichen werden, um festzustellen, ob die Parameterwerte innerhalb des zulässigen Parameterbereichs liegen oder nicht.

In einem Schritt 701 erfolgt, durch die Detektionsanordnung des ersten schwimmfähigen Offshore-Bauwerks, ein Detektieren einer Ankerverbindungsreißindikation, insbesondere aufgrund eines Feststellens, dass ein erfasster Parameter den zulässigen Parameterbereich nicht erfüllt, also insbesondere außerhalb des zulässigen Parameterbereichs liegt.

Optional kann in Schritt 702, durch eine Kommunikationseinrichtung des ersten schwimmfähigen Offshore-Bauwerks, unmittelbar bei bzw. nach einer Detektion einer Ankerverbindungsreißindikation eine Alarmnachricht an mindestens ein weiteres mit dem ersten schwimmfähigen Offshore-Bauwerk über das spannungslos zu schaltende Seeenergiekabel verbundene Bauwerk gesendet werden.

Die Alarmnachricht kann Instruktion zum elektrischen Trennen der Verbindung zu dem Seeenergiekabel enthalten. Das weitere Bauwerk kann beispielsweise, wie in Figur 6 gezeigt, ein weiteres schwimmfähiges Offshore-Bauwerk sein. Vorzugsweise kann die Kommunikationseinrichtung eingerichtet sein zum Übertragen der Alarmnachricht über den (optischen) Kommunikationsleiter des spannungslos zu schaltenden Seeenergiekabels.

Dann erfolgt in Schritt 703 (unmittelbar) nach bzw. bei einer Detektion einer Ankerverbindungsreißindikation und/oder (unmittelbar) nach Aussenden der Alarmnachricht, durch die Schalteinrichtung, ein zumindest elektrisches Trennen der elektrischen Verbindung zu dem Seeenergiekabel. Insbesondere werden sämtliche an dem Offshore-Bauwerk angeschlossene Seeenergiekabel spannungslos geschaltet, insbesondere durch Lasttrennschalter der Schalteinrichtung.

In einem optionalen Schritt 704 wird, durch ein Empfangsmodul einer Schalteinrichtung des weiteren Bauwerks, die ausgesendete Alarmnachricht empfangen.

In dem optionalen Schritt 705 erfolgt, durch die Schalteinrichtung des weiteren Bauwerks, ein zumindest elektrisches Trennen der elektrischen Verbindung zu dem Seeenergiekabel, welches das weitere Bauwerk mit dem ersten schwimmfähigen Offshore-Bauwerk elektrisch verbindet.

## Patentansprüche

1. Schwimmfähiges Offshore-Bauwerk (100, 200, 300, 400, 500, 600), umfassend:
- mindestens einen Seeenergiekabelanschluss (106, 606), eingerichtet zum Anschließen eines Seeenergiekabels (116, 616),
- mindestens einen Ankeranschluss (114, 314, 414, 514, 614), eingerichtet zum Anschließen mindestens einer Ankerverbindung (122, 322, 422, 522, 622) zum Verankern des schwimmfähigen Offshore-Bauwerks (100, 200, 300, 400, 500, 600) an einem Unterwasserboden,
- mindestens eine Detektionsanordnung (108, 208, 308, 408, 508, 608), eingerichtet zum Detektieren einer Ankerverbindungsreißindikation, **dadurch gekennzeichnet, dass** das schwimmfähige Offshore-Bauwerk (100, 200,300,400,500,600) ferner umfasst
- mindestens eine Schalteinrichtung (112, 212, 312, 412, 512, 612), eingerichtet zum zumindest elektrischen Trennen der elektrischen Verbindung zu dem an dem Seeenergiekabelanschluss (106, 606) angeschlossenen Seeenergiekabel (116, 616) bei oder nach einer Detektion der Ankerverbindungsreißindikation (122, 322, 422, 522, 622).

2. Schwimmfähiges Offshore-Bauwerk (100, 200, 300, 400, 500, 600) nach Anspruch 1, **dadurch gekennzeichnet, dass**
- das schwimmfähige Offshore-Bauwerk (100, 200, 300, 400, 500, 600) ein Fundament (104, 204, 304, 404, 504, 604) mit mindestens einem Schwimmkörper (132) umfasst, und
- das schwimmfähige Offshore-Bauwerk (100, 200, 300, 400, 500, 600) mindestens eine auf dem Fundament angeordnete Vorrichtung (102, 202, 302, 402, 402, 602) umfasst, die den Seeenergiekabelanschluss (106, 606) aufweist,
- wobei die Vorrichtung (102, 202, 302, 402, 402, 602) insbesondere eine elektrische Energieerzeugungsvorrichtung (102, 202, 302, 402, 402, 602) ist.

3. Schwimmfähiges Offshore-Bauwerk (100, 200, 300, 400, 500, 600) nach Anspruch 1 oder 2, **dadurch gekennzeichnet, dass**
- die Detektionsanordnung (108, 208, 308, 408, 508, 608) mindestens einen Positionssensor (240) umfasst, eingerichtet zum Erfassen der Position des schwimmfähigen Offshore-Bauwerks (100, 200, 300, 400, 500, 600), und
- die Detektionsanordnung (108, 208, 308, 408, 508, 608) mindestens ein Positionsauswertemodul (242) umfasst, eingerichtet zum Detektieren der Ankerverbindungsreißindikation, basierend auf der erfassten Position und einem vorgegebenen zulässigen Positionsbereich.

4. Schwimmfähiges Offshore-Bauwerk (100, 200, 300, 400, 500, 600) nach einem der vorherigen Ansprüche, **dadurch gekennzeichnet, dass**
- die Detektionsanordnung (108, 208, 308, 408, 508, 608) mindestens einen Ankerverbindungsstruktursensor umfasst, eingerichtet zum Erfassen mindestens eines Ankerverbindungsstrukturparameters der Ankerverbindung, und
- die Detektionsanordnung (108, 208, 308, 408, 508, 608) mindestens ein Ankerverbindungsstrukturauswertemodul umfasst, eingerichtet zum Detektieren der Ankerverbindungsreißindikation, basierend auf dem mindestens einen erfassten Ankerverbindungsstrukturparameter und mindestens einem vorgegebenen zulässigen Ankerverbindungsstrukturparameterbereich.

5. Schwimmfähiges Offshore-Bauwerk (100, 200, 300, 400, 500, 600) nach einem der vorherigen Ansprüche, **dadurch gekennzeichnet, dass**
- die Detektionsanordnung (108, 208, 308, 408, 508, 608) mindestens einen elektrische Sensoreinrichtung (351) umfasst, eingerichtet zum Erfassen mindestens eines elektrischen Parameters eines an der Ankerverbindung (122, 322, 422, 522, 622) zumindest teilweise entlang geführten elektrischen Leiters (356), und
- die Detektionsanordnung (108, 208, 308, 408, 508, 608) mindestens ein elektrisches Auswertemodul (354) umfasst, eingerichtet zum Detektieren der Ankerverbindungsreißindikation, basierend auf dem mindestens einen erfassten elektrischen Parameter und mindestens einem vorgegebenen zulässigen Parameterbereich.

6. Schwimmfähiges Offshore-Bauwerk (100, 200, 300, 400, 500, 600) nach einem der vorherigen Ansprüche, **dadurch gekennzeichnet, dass**
- die Detektionsanordnung (108, 208, 308, 408, 508, 608) mindestens eine optische Sensoreinrichtung (461) umfasst, eingerichtet zum Erfassen mindestens eines optischen Parameters eines an der Ankerverbindung (122, 322, 422, 522, 622) zumindest teilweise entlang geführten optischen Leiters (462), und
- die Detektionsanordnung (108, 208, 308, 408, 508, 608) mindestens ein optisches Auswertemodul (468) umfasst, eingerichtet zum Detektieren der Ankerverbindungsreißindikation, basierend auf dem mindestens einen erfassten optischen Parameter und mindestens einem vorgegebenen zulässigen optischen Parameterbereich.

7. Schwimmfähiges Offshore-Bauwerk (100, 200, 300, 400, 500, 600) nach einem der vorherigen Ansprüche, **dadurch gekennzeichnet, dass**
- die Detektionsanordnung (108, 208, 308, 408, 508, 608) mindestens einen mechanische Sensoreinrichtung (575) umfasst, eingerichtet zum Erfassen mindestens eines mechanischen Parameters eines an der Ankerverbindung (122, 322, 422, 522, 622) zumindest teilweise entlang geführten Messseils (572), und
- die Detektionsanordnung (108, 208, 308, 408, 508, 608) mindestens ein mechanisches Auswertemodul (574) umfasst, eingerichtet zum Detektieren der Ankerverbindungsreißindikation, basierend auf dem mindestens einen erfassten mechanischen Parameter und mindestens einem vorgegebenen zulässigen mechanischen Parameterbereich.

8. Schwimmfähiges Offshore-Bauwerk (100, 200, 300, 400, 500, 600) nach einem der vorherigen Ansprüche, **dadurch gekennzeichnet, dass**
- das schwimmfähige Offshore-Bauwerk (100, 200, 300, 400, 500, 600) mindestens eine zwischen der Detektionsanordnung und der Schalteinrichtung (112, 212, 312, 412, 512, 612) angeordnete Schnittstelle (134, 234, 334, 434, 534, 634) umfasst,
- wobei die mindestens eine Schnittstelle (134, 234, 334, 434, 534, 634) eine analoge Schnittstelle (134, 234, 334, 434, 534, 634) und/oder eine digitale Schnittstelle (134, 234, 334, 434, 534, 634) und/oder eine mechanische Schnittstelle (134, 234, 334, 434, 534, 634) ist.

9. Schwimmfähiges Offshore-Bauwerk (100, 200, 300, 400, 500, 600) nach einem der vorherigen Ansprüche, **dadurch gekennzeichnet, dass**
- die Schalteinrichtung (112, 212, 312, 412, 512, 612) mindestens einen Lasttrennschalter umfasst.
und/oder
- die Schalteinrichtung (112, 212, 312, 412, 512, 612) eingerichtet ist zum mechanischen Trennen des Seeenergiekabels (116, 616).

10. Schwimmfähiges Offshore-Bauwerk (100, 200, 300, 400, 500, 600) nach einem der vorherigen Ansprüche, **dadurch gekennzeichnet, dass**
- das schwimmfähige Offshore-Bauwerk (100, 200, 300, 400, 500, 600) mindestens eine Kommunikationseinrichtung (682) umfasst, eingerichtet zum Aussenden einer Alarmnachricht an mindestens ein weiteres über das Seeenergiekabel (116, 616) mit dem Offshore-Bauwerk (100, 200, 300, 400, 500, 600) verbundenes Bauwerk (600.2) bei oder nach einer Detektion einer Ankerverbindungsreißindikation,
- wobei die Alarmnachricht Instruktion zum elektrischen Trennen der elektrischen Verbindung zu dem Seeenergiekabel (116, 616) an dem weiteren Bauwerk (600.2) umfasst,
und/oder
- die Schalteinrichtung (112, 212, 312, 412, 512, 612) ein mindestens ein Empfangsmodul (680) umfasst, eingerichtet zum Empfangen mindestens einer Alarmnachricht, enthaltend Instruktion zum elektrischen Trennen des Seeenergiekabels (116, 616),
- wobei die Schalteinrichtung (112, 212, 312, 412, 512, 612) eingerichtet ist zum zumindest elektrischen Trennen der elektrischen Verbindung zu dem angeschlossenen Seeenergiekabel (116, 616) bei einem Empfang der Alarmnachricht.

11. Schwimmfähiges Offshore-Bauwerk (100, 200, 300, 400, 500, 600) nach einem der vorherigen Ansprüche, **dadurch gekennzeichnet, dass**
- das schwimmfähige Offshore-Bauwerk (100, 200, 300, 400, 500, 600) mindestens eine Aktivierungsanordnung umfasst, eingerichtet zum Aktivieren von mindestens einem Verbraucher und/oder mindestens einer Energiequelle, bei oder nach einer Detektion einer Ankerverbindungsreißindikation,
- wobei der mindestens eine Verbraucher ein Aktor zum Schließen einer Tür und/oder ein Aktor zum Unterbrechen eines Fluidstroms und/oder ein Leuchtmittel ist,
und/oder
- wobei die mindestens eine Energiequelle eine wiederaufladbare Batterie und/oder ein brennstoffgetriebener Generator ist.

12. Schwimmfähiges Offshore-Bauwerk (100, 200, 300, 400, 500, 600) nach einem der vorherigen Ansprüche, **dadurch gekennzeichnet, dass**
- das schwimmfähige Offshore-Bauwerk (100, 200, 300, 400, 500, 600) mindestens eine Deaktivierungsanordnung umfasst, eingerichtet zum Deaktivieren von mindestens einem Verbraucher und/oder mindestens einer Energiequelle, bei oder nach einer Detektion einer Ankerverbindungsreißindikation,
- wobei der mindestens eine Verbraucher Bestandteil einer Elektrolyseanlage ist, und/oder
- wobei die mindestens eine Energiequelle ein Windkraftgenerator und/oder eine Photovoltaikanlage ist.

13. Energieerzeugungssystem (684), umfassend:
- mindestens ein schwimmfähiges Offshore-Bauwerk (100, 200, 300, 400, 500, 600) nach einem der vorherigen Ansprüche,
- mindestens ein Seeenergiekabel (116, 616), und
- mindestens ein weiteres mit dem schwimmfähigen Offshore-Bauwerk (100, 200, 300, 400, 500, 600) über das Seeenergiekabel (116, 616) elektrisch verbundenes Bauwerk (600.2).

14. Verfahren, durchgeführt bei einem schwimmfähigen Offshore-Bauwerk nach Anspruch 1, umfassend:
- Detektieren, durch mindestens eine Detektionsanordnung (108, 208, 308, 408, 508, 608), einer Ankerverbindungsreißindikation, und
- elektrisches Trennen, durch mindestens eine Schalteinrichtung (112, 212, 312, 412, 512, 612), der elektrischen Verbindung zu dem an einem Seeenergiekabelanschluss (106, 606) des Offshore-Bauwerks (100, 200, 300, 400, 500, 600) angeschlossenen Seeenergiekabels (116, 616) bei oder nach einer Detektion der Ankerverbindungsreißindikation.

15. Verwendung eines schwimmfähigen Offshore-Bauwerks nach Anspruch 1 mit einer Detektionsanordnung (108, 208, 308, 408, 508, 608), eingerichtet zum Detektieren einer Ankerverbindungsreißindikation, und mindestens einer Schalteinrichtung (112, 212, 312, 412, 512, 612), eingerichtet zum zumindest elektrischen Trennen der elektrischen Verbindung zu dem an einem Seeenergiekabelanschluss eines schwimmfähigen Offshore-Bauwerks (100, 200, 300, 400, 500, 600) angeschlossenen Seeenergiekabels bei oder nach einer Detektion einer Ankerverbindungsreißindikation, in dem schwimmfähigen Offshore-Bauwerk (100, 200, 300, 400, 500, 600).

## Claims

1. A floatable offshore structure (100, 200, 300, 400, 500, 600), comprising:
- at least one submarine power cable connector (106, 606) configured to connect an submarine power cable (116, 616),
- at least one anchor connector (114, 314, 414, 514, 614) configured to connect at least one anchor connection (122, 322, 422, 522, 622) for anchoring the floatable offshore structure (100, 200, 300, 400, 500, 600) to a seabed,
- at least one detection arrangement (108, 208, 308, 408, 508, 608) configured to detect an anchor connection break indication,
**characterized in that** the floatable offshore structure (100, 200, 300, 400, 500, 600) further comprises
- at least one switching equipment (112, 212, 312, 412, 512, 612) configured to at least electrically disconnect the electrical connection to the submarine power cable (116, 616) connected to the submarine power cable connector (106, 606) upon or after detection of the anchor connection break indication (122, 322, 422, 522, 622).

2. The floatable offshore structure (100, 200, 300, 400, 500, 600) according to claim 1, **characterized in that**
- the floatable offshore structure (100, 200, 300, 400, 500, 600) comprises a foundation (104, 204, 304, 404, 504, 604) with at least one buoyant body (132), and
- the floatable offshore structure (100, 200, 300, 400, 500, 600) comprises at least one device (102, 202, 302, 402, 602) arranged on the foundation, which comprises the submarine power cable connector (106, 606),
- wherein the device (102, 202, 302, 402, 402, 602) is, in particular, an electrical power generation device (102, 202, 302, 402, 402, 602).

3. The floatable offshore structure (100, 200, 300, 400, 500, 600) according to claim 1 or 2, **characterized in that**
- the detection arrangement (108, 208, 308, 408, 508, 608) comprises at least one position sensor (240) configured to detect the position of the floatable offshore structure (100, 200, 300, 400, 500, 600), and
- the detection arrangement (108, 208, 308, 408, 508, 608) comprises at least one position evaluation module (242) configured to detect the anchor connection break indication based on the detected position and a predetermined permissible position range.

4. The floatable offshore structure (100, 200, 300, 400, 500, 600) according to one of the preceding claims, **characterized in that**
- the detection arrangement (108, 208, 308, 408, 508, 608) comprises at least one anchor connection structure sensor configured to detect at least one anchor connection structure parameter of the anchor connection, and
- the detection arrangement (108, 208, 308, 408, 508, 608) comprises at least one anchor connection structure evaluation module configured to detect the anchor connection break indication based on the at least one detected anchor connection structure parameter and at least one predetermined permissible anchor connection structure parameter range.

5. The floatable offshore structure (100, 200, 300, 400, 500, 600) according to one of the preceding claims, **characterized in that**
- the detection arrangement (108, 208, 308, 408, 508, 608) comprises at least one electrical sensor equipment (351) configured to detect at least one electrical parameter of an electrical conductor (356) guided at least partially along the anchor connection (122, 322, 422, 522, 622), and
- the detection arrangement (108, 208, 308, 408, 508, 608) comprises at least one electrical evaluation module (354) configured to detect the anchor connection break indication based on the at least one detected electrical parameter and at least one predetermined permissible parameter range.

6. The floatable offshore structure (100, 200, 300, 400, 500, 600) according to one of the preceding claims, **characterized in that**
- the detection arrangement (108, 208, 308, 408, 508, 608) comprises at least one optical sensor equipment (461) configured to detect at least one optical parameter of an optical conductor (462) guided at least partially along the anchor connection (122, 322, 422, 522, 622), and
- the detection arrangement (108, 208, 308, 408, 508, 608) comprises at least one optical evaluation module (468) configured to detect the anchor connection break indication based on the at least one detected optical parameter and at least one predetermined permissible optical parameter range.

7. The floatable offshore structure (100, 200, 300, 400, 500, 600) according to one of the preceding claims, **characterized in that**
- the detection arrangement (108, 208, 308, 408, 508, 608) comprises at least one mechanical sensor equipment (575) configured to detect at least one mechanical parameter of a measuring cable (572) guided at least partially along the anchor connection (122, 322, 422, 522, 622), and
- the detection arrangement (108, 208, 308, 408, 508, 608) comprises at least one mechanical evaluation module (574) configured to detect the anchor connection break indication based on the at least one detected mechanical parameter and at least one predetermined permissible mechanical parameter range.

8. The floatable offshore structure (100, 200, 300, 400, 500, 600) according to one of the preceding claims, **characterized in that**
- the floatable offshore structure (100, 200, 300, 400, 500, 600) comprises at least one interface (134, 234, 334, 434, 534, 634) arranged between the detection arrangement and the switching equipment (112, 212, 312, 412, 512, 612),
- wherein the at least one interface (134, 234, 334, 434, 534, 634) comprises an analog interface (134, 234, 334, 434, 534, 634) and/or a digital interface (134, 234, 334, 434, 534, 634) and/or a mechanical interface (134, 234, 334, 434, 534, 634).

9. The floatable offshore structure (100, 200, 300, 400, 500, 600) according to one of the preceding claims, **characterized in that**
- the switching equipment (112, 212, 312, 412, 512, 612) comprises at least one load break switch,
and/or
- the switching equipment (112, 212, 312, 412, 512, 612) is configured to mechanically disconnect the submarine power cable (116, 616).

10. The floatable offshore structure (100, 200, 300, 400, 500, 600) according to one of the preceding claims, **characterized in that**
- the floatable offshore structure (100, 200, 300, 400, 500, 600) comprises at least one communication equipment (682) configured to transmit an alarm message to at least one further structure (600.2) connected to the offshore structure (100, 200, 300, 400, 500, 600) upon or after detection of an anchor connection break indication,
- wherein the alarm message comprises instructions for electrically disconnecting the electrical connection to the submarine power cable (116, 616) at the further structure (600.2),
and/or
- the switching equipment (112, 212, 312, 412, 512, 612) comprises at least one receiving module (680) configured to receive at least one alarm message containing instructions for electrically disconnecting the submarine power cable (116, 616),
- wherein the switching equipment (112, 212, 312, 412, 512, 612) is configured to at least electrically disconnect the electrical connection to the connected submarine power cable (116, 616) upon receipt of the alarm message.

11. The floatable offshore structure (100, 200, 300, 400, 500, 600) according to one of the preceding claims, **characterized in that**
- the floatable offshore structure (100, 200, 300, 400, 500, 600) comprises at least one activation arrangement configured to activate at least one consumer and/or at least one energy source upon or after detection of an anchor connection break indication,
- wherein the at least one consumer is an actuator for closing a door and/or an actuator for interrupting a fluid flow and/or a light source,
and/or
- wherein the at least one energy source is a rechargeable battery and/or a fuel-powered generator.

12. The floatable offshore structure (100, 200, 300, 400, 500, 600) according to one of the preceding claims, **characterized in that**
- the floatable offshore structure (100, 200, 300, 400, 500, 600) comprises at least one deactivation arrangement configured to deactivate at least one consumer and/or at least one energy source upon or after detection of an anchor connection break indication,
- wherein the at least one consumer is part of an electrolysis plant,
and/or
- wherein the at least one energy source is a wind power generator and/or a photovoltaic system.

13. An energy generation system (684) comprising:
- at least one floatable offshore structure (100, 200, 300, 400, 500, 600) according to one of the preceding claims,
- at least one submarine power cable (116, 616), and
- at least one further structure (600.2) electrically connected to the floatable offshore structure (100, 200, 300, 400, 500, 600) by means of the submarine power cable (116, 616).

14. A method performed at a floatable offshore structure according to claim 1, comprising:
- detecting, by at least one detection arrangement (108, 208, 308, 408, 508, 608), an anchor connection break indication, and
- electrically disconnecting, by at least one switching equipment (112, 212, 312, 412, 512, 612), the electrical connection to the submarine power cable (116, 616) connected to a submarine power cable connector (106, 606) of the offshore structure (100, 200, 300, 400, 500, 600) upon or after detection of the anchor connection break indication.

15. A use of a floatable offshore structure according to claim 1 with a detection arrangement (108, 208, 308, 408, 508, 608) configured to detect an anchor connection break indication, and at least one switching equipment (112, 212, 312, 412, 512, 612) configured to at least electrically disconnect the electrical connection to the submarine power cable connected to a submarine power cable connector of a floatable offshore structure (100, 200, 300, 400, 500, 600) upon or after detection of an anchor connection break indication in the floatable offshore structure (100, 200, 300, 400, 500, 600).

## Revendications

1. Structure offshore flottante (100, 200, 300, 400, 500, 600) comprenant:
- au moins un raccordement de câble d'énergie marine (106, 606) configuré pour raccorder un câble d'énergie marine (116, 616),
- au moins un raccord d'ancrage (114, 314, 414, 514, 614) configuré pour raccorder au moins une liaison d'ancrage (122, 322, 422, 522, 622) afin d'ancrer la structure offshore flottante (100, 200, 300, 400, 500, 600) à un fond sous-marin,
- au moins un dispositif de détection (108, 208, 308, 408, 508, 608) configuré pour détecter une indication de rupture de liaison d'ancrage, caractérisé **caractérisé en ce que** la structure offshore flottante (100, 200, 300, 400, 500, 600) comprend en outre
- au moins un dispositif de commutation (112, 212, 312, 412, 512, 612) configuré pour déconnecter au moins électriquement la connexion électrique au câble d'énergie marin (116, 616) connecté au raccordement de câble d'énergie marin (106, 606) lors de ou après une détection de l'indication de rupture de liaison d'ancrage (122, 322, 422, 522, 622).

2. Structure offshore flottante (100, 200, 300, 400, 500, 600) selon la revendication **1, caractérisée en ce que**
- la structure offshore flottante (100, 200, 300, 400, 500, 600) comprend une fondation (104, 204, 304, 404, 504, 604) avec au moins un flotteur (132), et
- la structure offshore flottante (100, 200, 300, 400, 500, 600) comprend au moins un dispositif (102, 202, 302, 402, 402, 602) disposé sur la fondation, qui comporte le raccordement de câble d'énergie marine (106, 606),
- où le dispositif (102, 202, 302, 402, 402, 602) est en particulier un dispositif de production d'énergie électrique (102, 202, 302, 402, 402, 602).

3. Structure offshore flottante (100, 200, 300, 400, 500, 600) selon la revendication 1 ou 2, **caractérisée en ce que**
- le dispositif de détection (108, 208, 308, 408, 508, 608) comprend au moins un capteur de position (240) configuré pour détecter la position de la structure offshore flottante (100, 200, 300, 400, 500, 600), et
- le dispositif de détection (108, 208, 308, 408, 508, 608) comprend au moins un module d'évaluation de position (242) configuré pour détecter l'indication de rupture de liaison d'ancrage basé sur la position détectée et d'une plage de positions admissibles prédéfinie.

4. Structure offshore flottante (100, 200, 300, 400, 500, 600) selon l'une des revendications précédentes, **caractérisée en ce que**
- le dispositif de détection (108, 208, 308, 408, 508, 608) comprend au moins un capteur de structure de liaison d'ancrage, configuré pour détecter au moins un paramètre de structure de liaison d'ancrage de la liaison d'ancrage, et
- le dispositif de détection (108, 208, 308, 408, 508, 608) comprend au moins un module d'évaluation de structure de liaison d'ancrage, configuré pour détecter l'indication de rupture de liaison d'ancrage basé sur au moins un paramètre de structure de liaison d'ancrage détecté et d'au moins une plage de paramètres de structure de liaison d'ancrage admissible prédéfinie.

5. Structure offshore flottante (100, 200, 300, 400, 500, 600) selon l'une des revendications précédentes, **caractérisée en ce que**
- le dispositif de détection (108, 208, 308, 408, 508, 608) comprend au moins un dispositif de détection électrique (351) configuré pour détecter au moins un paramètre électrique d'un conducteur électrique (356) guidé au moins en partie le long de la liaison d'ancrage (122, 322, 422, 522, 622), et
- le dispositif de détection (108, 208, 308, 408, 508, 608) comprend au moins un module d'évaluation électrique (354) configuré pour détecter l'indication de rupture de liaison d'ancrage sur la base du au moins un paramètre électrique détecté et d'au moins une plage de paramètres admissibles prédéfinie.

6. Structure offshore flottante (100, 200, 300, 400, 500, 600) selon l'une des revendications précédentes, **caractérisée en ce que**
- le dispositif de détection (108, 208, 308, 408, 508, 608) comprend au moins un dispositif de détection optique (461) configuré pour détecter au moins un paramètre optique d'un guide optique (462) guidé au moins en partie le long de la liaison d'ancrage (122, 322, 422, 522, 622), et
- le dispositif de détection (108, 208, 308, 408, 508, 608) comprend au moins un module d'évaluation optique (468) configuré pour détecter l'indication de rupture de liaison d'ancrage sur la base du au moins un paramètre optique détecté et d'au moins une plage de paramètres optiques admissibles prédéfinie.

7. Structure offshore flottante (100, 200, 300, 400, 500, 600) selon l'une des revendications précédentes, **caractérisée en ce que**
- le dispositif de détection (108, 208, 308, 408, 508, 608) comprend au moins un dispositif de détection mécanique (575) configuré pour détecter au moins un paramètre mécanique d'un câble de mesure (572) guidé au moins en partie le long de la liaison d'ancrage (122, 322, 422, 522, 622), et
- le dispositif de détection (108, 208, 308, 408, 508, 608) comprend au moins un module d'évaluation mécanique (574) configuré pour détecter l'indication de rupture de liaison d'ancrage sur la base du au moins un paramètre mécanique détecté et d'au moins une plage de paramètres mécaniques admissibles prédéfinie.

8. Structure offshore flottante (100, 200, 300, 400, 500, 600) selon l'une des revendications précédentes, **caractérisée en ce que**
- la structure offshore flottante (100, 200, 300, 400, 500, 600) comprend au moins une interface (134, 234, 334, 434, 534, 634) disposée entre le dispositif de détection et le dispositif de commutation (112, 212, 312, 412, 512, 612),
- où la au moins une interface (134, 234, 334, 434, 534, 634) comprend une interface analogique (134, 234, 334, 434, 534, 634) et/ou une interface numérique (134, 234, 334, 434, 534, 634) et/ou une interface mécanique (134, 234, 334, 434, 534, 634).

9. Structure offshore flottante (100, 200, 300, 400, 500, 600) selon l'une des revendications précédentes, **caractérisée en ce que**
- le dispositif de commutation (112, 212, 312, 412, 512, 612) comprend au moins un sectionneur à coupure en charge.
et/ou
- le dispositif de commutation (112, 212, 312, 412, 512, 612) est configuré pour déconnecter mécaniquement le câble d'énergie marine (116, 616).

10. Structure offshore flottante (100, 200, 300, 400, 500, 600) selon l'une des revendications précédentes, **caractérisée en ce que**
- la structure offshore flottante (100, 200, 300, 400, 500, 600) comprend au moins un dispositif de communication (682) configuré pour envoyer un message d'alarme à au moins une autre structure (600.2) reliée à la structure offshore (100, 200, 300, 400, 500, 600) lors de ou après la détection d'une indication de rupture de liaison d'ancrage,
- où le message d'alarme comprend des instructions pour déconnecter électriquement la connexion électrique au câble d'alimentation électrique marin (116, 616) au niveau de l'autre structure (600.2),
et/ou
- le dispositif de commutation (112, 212, 312, 412, 512, 612) comprend au moins un module de réception (680) configuré pour recevoir au moins un message d'alarme contenant une instruction de déconnexion électrique du câble d'alimentation marin (116, 616),
- où le dispositif de commutation (112, 212, 312, 412, 512, 612) est configuré pour au moins déconnecter électriquement la connexion électrique au câble d'alimentation marin connecté (116, 616) lors de la réception du message d'alarme.

11. Structure offshore flottante (100, 200, 300, 400, 500, 600) selon l'une des revendications précédentes, **caractérisée en ce que**
- la structure offshore flottante (100, 200, 300, 400, 500, 600) comprend au moins un dispositif d'activation configuré pour activer au moins un consommateur et/ou au moins une source d'énergie lors de ou après la détection d'une indication de rupture de liaison d'ancrage,
- où le au moins un consommateur est un actionneur pour fermer une porte et/ou un actionneur pour interrompre un écoulement de fluide et/ou un moyen d'éclairage,
et/ou
- où la au moins une source d'énergie est une batterie rechargeable et/ou un générateur à combustible.

12. Structure offshore flottante (100, 200, 300, 400, 500, 600) selon l'une des revendications précédentes, **caractérisée en ce que**
- la structure offshore flottante (100, 200, 300, 400, 500, 600) comprend au moins un dispositif de désactivation configuré pour désactiver au moins un consommateur et/ou au moins une source d'énergie lors de ou après la détection d'une indication de rupture de liaison d'ancrage,
- où le au moins un consommateur fait partie d'une installation d'électrolyse, et/ou
- où la au moins une source d'énergie est un générateur éolien et/ou une installation photovoltaïque.

13. Système de production d'énergie (684) comprenant :
- au moins une structure offshore flottante (100, 200, 300, 400, 500, 600) selon l'une des revendications précédentes,
- au moins un câble d'énergie marine (116, 616), et
- au moins une autre structure (600.2) reliée électriquement à la structure offshore flottante (100, 200, 300, 400, 500, 600) par le câble d'énergie marine (116, 616).

14. Méthode mis en œuvre dans une structure offshore flottante selon la revendication 1, comprenant:
- détecter, à l'aide d'au moins un dispositif de détection (108, 208, 308, 408, 508, 608), une indication de rupture de liaison d'ancrage, et
- séparer électriquement, par au moins un dispositif de commutation (112, 212, 312, 412, 512, 612), la connexion électrique vers un raccordement de câble d'énergie marine (106, 606) de la structure offshore (100, 200, 300, 400, 500, 600) lors de ou après une détection de l'indication de rupture de liaison d'ancrage.

15. Utilisation d'une structure offshore flottante selon la revendication 1 avec un dispositif de détection (108, 208, 308, 408, 508, 608) configuré pour détecter une indication de rupture de liaison d'ancrage, et au moins un dispositif de commutation (112, 212, 312, 412, 512, 612) configuré pour au moins déconnecter électriquement la connexion électrique à un câble d'énergie marine connecté à un raccordement de câble d'énergie marine d'une structure offshore flottante (100, 200, 300, 400, 500, 600), lors de ou après la détection d'une indication de rupture de liaison d'ancrage, dans la structure offshore flottante (100, 200, 300, 400, 500, 600).
